(19) Europäisches Patentamt
European Patent Office
Office européen des brevets

(11)  EP 2 512 662 B1

(12)  FASCICULE DE BREVET EUROPEEN

(45) Date de publication et mention
de la délivrance du brevet:
**07.05.2014  Bulletin 2014/19**

(51) Int Cl.:
***B01J 23/882*** *(2006.01)*   ***B01J 27/19*** *(2006.01)*
***C10G 45/08*** *(2006.01)*   ***B01J 23/28*** *(2006.01)*
***B01J 23/75*** *(2006.01)*   ***B01J 27/14*** *(2006.01)*
***B01J 37/02*** *(2006.01)*

(21) Numéro de dépôt: **10805252.3**

(22) Date de dépôt: **08.12.2010**

(86) Numéro de dépôt international:
**PCT/FR2010/000819**

(87) Numéro de publication internationale:
**WO 2011/080407 (07.07.2011 Gazette 2011/27)**

(54) **CATALYSEUR UTILISABLE EN HYDROTRAITEMENT COMPRENANT DES METAUX DES GROUPES VIII ET VIB ET PREPARATION AVEC DE L'ACIDE ACETIQUE ET DU SUCCINATE DE DIALKYLE C1-C4**

KATALYSATOR ZUR VERWENDUNG FÜR DIE HYDRODESULFURIERUNG MIT METALLEN DER GRUPPE VII UND VIB SOWIE ZUBEREITUNG MIT ESSIGSÄURE UND DIALKYLSUCCINAT C1-C4

CATALYST THAT CAN BE USED IN HYDROTREATMENT, COMPRISING METALS OF GROUPS VIII AND VIB, AND PREPARATION WITH ACETIC ACID AND DIALKYL SUCCINATE C1-C4

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2009  FR 0906103**
**16.12.2009  FR 0906101**

(43) Date de publication de la demande:
**24.10.2012  Bulletin 2012/43**

(73) Titulaires:
• **IFP Energies nouvelles**
**92852 Rueil-Malmaison Cedex (FR)**
• **Total Raffinage Marketing**
**92800 Puteaux (FR)**

(72) Inventeurs:
• **MARCHAND, Karin**
**F-69008 Lyon (FR)**
• **GUICHARD, Bertrand**
**F-38140 Izeaux (FR)**
• **DIGNE, Mathieu**
**F-69007 Lyon (FR)**
• **REBEILLEAU, Michael**
**F-76700 Harfleur (FR)**
• **LOPEZ , Sylvie**
**F-69007 Lyon (FR)**
• **HUGON, Antoine**
**F-69007 Lyon (FR)**
• **BONDUELLE, Audrey**
**F-69340 Francheville (FR)**

(56) Documents cités:
**EP-A1- 1 892 039      WO-A1-2005/035691
WO-A1-2006/077326      WO-A2-2008/090282**

EP 2 512 662 B1

**Description**

L'invention concerne un catalyseur, sa méthode de préparation et son utilisation dans le domaine des hydrotraitements.

Habituellement, un catalyseur d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Il peut également s'agir de pré-traiter cette charge afin d'en éliminer les impuretés avant de lui faire subir différents procédés de transformation pour en modifier les propriétés physico-chimiques, tels que par exemple les procédés de reformage, d'hydrocraquage de distillats sous vide, de craquage catalytique, d'hydroconversion de résidus atmosphériques ou sous-vide. La composition et l'utilisation des catalyseurs d'hydrotraitement sont particulièrement bien décrits dans l'article de B. S Clausen, H. T. Tops∅e, et F.E. Massoth, issu de l'ouvrage Catalysis Science and Technology, volume 11 (1996), Springer-Verlag. Après sulfuration, plusieurs espèces de surface sont présentes sur le support, qui ne présentent pas toutes de bonnes performances pour les réactions souhaitées. Ces espèces sont particulièrement bien décrites dans la publication réalisée par Top∅e et al. parue dans le numéro 26 de Catalysis Review Science and Engineering de 1984, pages 395-420.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1$^{er}$ janvier 2009, contre 50 ppm au 1$^{er}$ janvier 2005). Par ailleurs, les raffineurs se trouvent contraints d'utiliser des charges de plus en plus réfractaires au procédés d'hydrotraitement d'une part parce que les bruts sont de plus en plus lourds et contiennent par conséquent de plus en plus d'impuretés, d'autre part du fait de l'augmentation des procédés de conversion dans les raffineries. En effet, ceux-ci génèrent des coupes plus difficiles à hydrotraiter que les coupes directement issues de la distillation atmosphérique. A titre d'exemple, on peut mentionner la coupe gazole issue du craquage catalytique, aussi nommée LCO (Light Cycle Oil) en référence à sa teneur élevée en composées aromatiques. Ces coupes sont co-traitées avec la coupe gazole issue de la distillation atmosphérique ; elles nécessitent des catalyseurs possédant des fonctions hydrodésulfurantes et hydrogénantes fortement améliorées par rapport aux catalyseurs traditionnels de façon à diminuer la teneur en aromatiques pour obtenir une densité et un indice de cétane en accord avec les spécifications.

En outre, les procédés de conversion comme le craquage catalytique ou l'hydrocraquage utilisent des catalyseurs possédant une fonction acide, ce qui les rend particulièrement sensibles à la présence d'impuretés azotées, et particulièrement les composés azotées basiques. Il est donc nécessaire d'utiliser des catalyseurs de pré-traitement de ces charges de façon à enlever ces composés. Ces catalyseurs d'hydrotraitement requièrent également une fonction hydrogénante améliorée dans la mesure où la première étape d'hydrodéazotation est reconnue comme étant une étape d'hydrogénation du cycle aromatique adjacent à la liaison C-N.

Il apparaît donc intéressant de trouver des moyens de préparation des catalyseurs d'hydrotraitement, de manière à obtenir de nouveaux catalyseurs à performances améliorées.

L'ajout d'un composé organique sur les catalyseurs d'hydrotraitement pour améliorer leur activité est maintenant bien connue de l'homme du métier. De nombreux brevets protègent l'utilisation de différentes gammes de composés organiques, tels que les mono,-di-ou polyalcools éventuellement éthérifiés (WO96/41848, WO01/76741, US4012340, US3954673, EP601722). Des catalyseurs modifiés avec des monoesters en C2-C 14 sont décrits dans les demandes de brevet EP466568 et EP1046424, cependant ces modifications ne permettent pas toujours d'accroître suffisamment les performances du catalyseur pour faire face aux spécifications concernant les teneurs en soufre des carburants qui ne cessent de devenir de plus en plus contraignantes pour les raffineurs.

Pour remédier à cela le brevet WO2006/077326 de la société Total propose l'utilisation d'un catalyseur comprenant des métaux des groupes VIB et VIII, un oxyde réfractaire comme support, et un composé organique, , comportant au moins 2 fonctions ester carboxylique de formule R1-O-CO-R2-CO-O-R1 ou R1-CO-O-R2-O-CO-R1 dans laquelle chaque R1 représente indépendamment un groupe alkyle en C1 à C18, alcényle C2 à C18, aryle C6 à C18, cycloalkyle en C3 à C8, alkylaryle ou arylalkyle en C7 à C20, ou les 2 groupes R1 forment conjointement un groupe divalent en C2 à C18, et R2 représente un groupe alkylène en C1 à C18, arylène en C6 à C 18, cycloalkylène en C3 à C7, ou une combinaison de ceux-ci, la chaîne carbonée des groupes hydrocarbonés représentés par R1 et R2 pouvant contenir ou porter un ou plusieurs hétéroatomes choisis parmi N,S et O, et chacun des groupes R1 et R2 pouvant porter un ou plusieurs substituants de formule -C(=O)O-R1 ou -O-C(=O)-R1 où R1 a la signification indiquée ci-dessus. Un mode préféré utilise le succinate de dialkyle C1-C4, et en particulier le succinate de diméthyle qui est exemplifié. Ces composés peuvent être introduits en présence d'un solvant (une liste importante de solvants est citée) ou d'un acide carboxylique. Parmi la trentaine d'acide nommément citée, il y a l'acide acétique mais qui n'est pas cité parmi la dizaine d'acides préférés. On notera dès maintenant que l'acide citrique est préféré.

Le procédé de préparation du catalyseur tel que décrit dans le brevet WO2006/077326 comprend des étapes de maturation et traitement thermique pouvant aller jusqu'à plusieurs jours , par exemple de 49 jours à 115 jours, ce qui limiterait très fortement la production de ces catalyseurs et nécessiterait par conséquent d'apporter des améliorations.

D'autres brevets dans l'art antérieur décrivent un gain d'activité lié à l'utilisation combinée d'un acide organique ou d'un alcool sur un catalyseur d'hydrotraitement. Ainsi, la demande de brevet publiée sous le n° JP1995-136523 de KK Japan Energy propose une solution consistant à :

- préparer selon un premier mode préféré de l'invention une solution contenant un support de catalyseur, un ou plusieurs métaux du groupe VI du tableau périodique des éléments, et du groupe VIII, un acide organique. Selon un second mode préféré de l'invention, cette solution comprend également un précurseur de phosphore.

- un traitement thermique réalisé entre 200 et 400°C

- une imprégnation du catalyseur obtenu précédemment par un acide organique ou un alcool dans un ratio de 0,1 à 2 par mole de métaux.

Un des modes préférés de l'invention comprend ensuite un séchage à une température inférieure à 200°C, tandis qu'un second mode préféré comprend un traitement thermique final à une température supérieure ou égale à 400°C.

On a constaté que ces catalyseurs ne présentent pas une activité suffisante pour satisfaire les nouvelles normes environnementales face aux charges de plus en plus pauvres en hydrogène dont disposent les raffineurs.

De même, le brevet WO2005/035691 revendique un procédé d'activation qui permet schématiquement de diminuer la teneur en phase cristallisée de type $CoMoO_4$ présente sur les catalyseurs régénérés régénérés comprenant des oxydes des métaux des groupes VIII et VIB, procédé comprenant la mise en contact du catalyseur régénéré avec un acide et un additif organique. A cette fin, L'emploi de la combinaison acide citrique (CA) et polyéthylène glycol (PEG) a été réalisé sur catalyseur régénéré dans de nombreux exemples.

La présente invention concerne un catalyseur et son procédé de préparation, le catalyseur étant utilisable pour l'hydrotraitement et permettant une amélioration des performances catalytiques (notamment de l'activité catalytique) par rapport aux catalyseurs de l'art antérieur. En effet, il a été mis en évidence que l'utilisation du couple succinate de dialkyle C1-C4 ,et en particulier de diméthyle, et acide acétique sur un précurseur catalytique séché conduit de façon surprenante à une activité catalytique nettement améliorée par rapport à chacun des composés du couple.

Plus précisément, l'invention concerne un catalyseur comprenant un support amorphe à base d'alumine, du phosphore, au moins un succinate de dialkyle C1-C4, de l'acide acétique et une fonction hydro-deshydrogénante comprenant au moins un élément du groupe VIII et au moins un élément du groupe VIB, catalyseur dont le spectre Raman comprend les bandes à 990 et/ou 974 cm-1 caractéristiques d'au moins un hétéropolyanion de Keggin, les bandes caractéristiques dudit succinate et la bande principale à 896 cm$^{-1}$ caractéristique de l'acide acétique. La fonction hydro-déshydrogénante est de préférence constituée par le cobalt et le molybdène. Elle peut aussi comprendre au moins un élément du groupe VIII et au moins un élément du groupe VIB à l'exception de la fonction hydro-déshydrogénante constituée par le cobalt et le molybdène.

Le catalyseur obtenu possède un spectre Raman caractéristique regroupant :

1) des bandes caractéristiques du ou des hétéropolyanions de type Keggin $PXY_{11}O_{40}{}^{x-}$ et/ou $PY_{12}O_{40}{}^{x-}$ où Y est un métal du groupe VIB et X un métal du groupe VIII.

D'après Griboval, Blanchard, Payen, Fournier, Dubois dans Catalysis Today 45 (1998) 277 fig. 3 e), les bandes principales de la structure $PCoMo_{11}O_{40}{}^{x-}$ sont sur catalyseur séché à 232, 366, 943, 974 cm$^{-1}$ et d'après M. T. Pope "Heteropoly and Isopoly oxometalates", Springer Verlag, p 8, ces bandes ne sont pas caractéristiques de la nature de l'atome X ou Y, mais bien de la structure de l'HPA. La bande la plus intense caractéristique de ce type d'HPA de Keggin lacunaire se situe à 974 cm$^{-1}$.

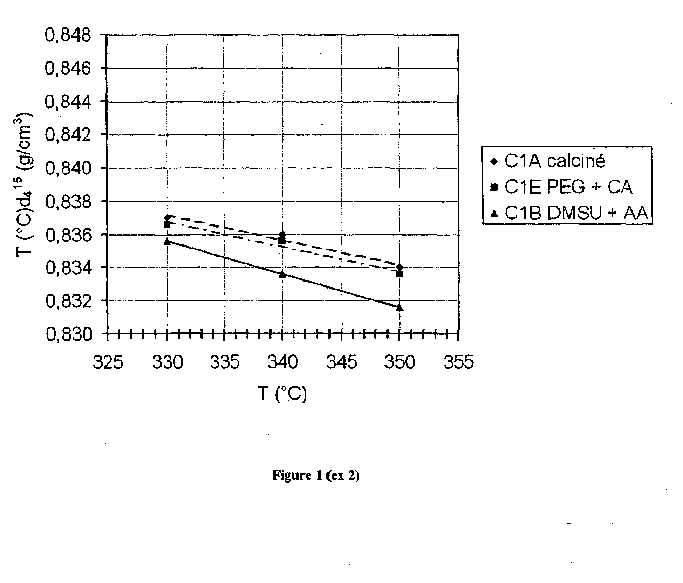

D'après Griboval, Blanchard, Gengembre, Payen, Fournier, Dubois, Bernard, Journal of Catalysis 188 (1999) 102, fig. 1 a), les bandes principales de $PMo_{12}O_{40}{}^{x-}$ sont à l'état massique de l'HPA, par exemple avec du cobalt en contre ion à 251, 603, 902, 970, 990 cm$^{-1}$. La bande la plus intense caractéristique de cet HPA de Keggin se situe à 990 cm$^{-1}$. M. T. Pope "Heteropoly and Isopoly oxometalates", Springer Verlag, p 8, nous enseigne également que ces bandes ne sont pas caractéristiques de la nature de l'atome X ou Y, mais bien de la structure de l'HPA de Keggin, complet, lacunaire ou substitué.

2) des bandes caractéristiques du (des) succinate(s) de dialkyle utilisé(s). Le spectre Raman du succinate de diméthyle constitue une empreinte univoque de cette molécule. Dans la zone spectrale 300-1800 cm$^{-1}$, ce spectre se caractérise par la série de bandes suivantes (seules les bandes les plus intenses sont reportées, en cm$^{-1}$) : 391,

853 (bande la plus intense), 924, 964, 1739 cm$^{-1}$. Le spectre du succinate de diéthyle comporte dans la zone spectrale considérée les bandes principales suivantes : 861 (bande la plus intense), 1101, 1117 cm$^{-1}$. De même pour le succinate de dibutyle : 843, 1123, 1303, 1439, 1463 cm$^{-1}$ et le succinate de diisopropyle : 833, 876, 1149, 1185, 1469 (bande la plus intense), 1733 cm$^{-1}$.

3) des bandes caractéristiques de l'acide acétique dont les principales: 448, 623, 896 cm$^{-1}$. La bande la plus intense est à 896 cm$^{-1}$.

La position exacte des bandes, leurs formes et leur intensités relatives peuvent varier dans une certaine mesure en fonction des conditions d'enregistrement du spectre, tout en restant caractéristiques de cette molécule. Les spectres Raman des composés organiques sont par ailleurs bien documentés soit dans les bases de données de spectre Raman (voir par exemple, Spectral Database for Organic Compounds, http://riodb01.ibase.aist.go.jp/sdbs/cgi-bin/direct_frame_top.cgi) soit par les fournisseurs du produit (voir par exemple, www.sigmaaldrich.com).

Les spectres Raman ont été obtenus avec un spectromètre de type Raman dispersif équipé d'un laser argon ionisé (514 nm). Le faisceau laser est focalisé sur l'échantillon à l'aide d'un microscope équipé d'un objectif x50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/mn puis collecté par un détecteur CCD. La résolution spectrale obtenue est de l'ordre de 0.5 cm$^{-1}$. La zone spectrale enregistrée est comprise entre 300 et 1800 cm$^{-1}$. La durée d'acquisition a été fixée à 120 s pour chaque spectre Raman enregistré.

De préférence, le succinate de dialkyle utilisé est le succinate de diméthyle, et le catalyseur possède dans son spectre les bandes Raman principales à 990 et/ou 974 cm$^{-1}$ caractéristique(s) du (des) hétéropolyanion(s) de Keggin, et 853 cm$^{-1}$ caractéristique du succinate de diméthyle et 896 cm$^{-1}$ caractéristique de l'acide acétique.

De préférence le catalyseur de l'invention comprend un support constitué d'alumine ou de silice-alumine.

Le catalyseur selon l'invention peut comprendre également du bore et/ou du fluor et/ou du silicium.

Il est également ici décrit un procédé de préparation du catalyseur selon l'invention, qui comporte au moins une étape d'imprégnation d'un précurseur catalytique séché à une température inférieure à 180°C contenant au moins du phosphore et une fonction hydrodéshydrogénante, ainsi qu'un support amorphe, par une solution d'imprégnation comprenant la combinaison acide acétique et succinate de dialkyle C1-C4, suivie d'une étape de maturation dudit précurseur catalytique imprégné, puis une étape de séchage à une température inférieure à 180°C, sans étape de calcination (traitement thermique sous air) ultérieure ; le catalyseur obtenu est de préférence soumis à une étape de sulfuration.

La fonction hydro-déshydrogénante comprend au moins un élément du groupe VIII et au moins un élément du groupe VIB .De préférence, la fonction hydro-déshydrogénante est constituée de cobalt et de molybdène.

Le procédé de préparation simple et rapide, avec des étapes unitaires ne dépassant pas quelques heures, permet ainsi une meilleure productivité à l'échelle industrielle que les procédés présents dans l'art antérieur.

Plus précisément, le procédé de préparation d'un catalyseur d'hydrotraitement selon l'invention comprend les étapes successives suivantes qui vont être détaillées par la suite :

a) au moins une étape d'imprégnation d'un support amorphe à base d'alumine par au moins une solution contenant les éléments de la fonction hydro-déshydrogénante et du phosphore ; on appellera le produit obtenu "précurseur catalytique"

b) séchage à une température inférieure à 180°C sans calcination ultérieure ; on appellera le produit obtenu "précurseur catalytique séché"

c) au moins une étape d'imprégnation par une solution d'imprégnation comprenant au moins un succinate de dialkyle C1-C4, l'acide acétique et au moins un composé de phosphore, si celui-ci n'a pas été introduit en totalité à l'étape a) ; on appellera le produit obtenu "précurseur catalytique séché imprégné"

d) une étape de maturation,

e) une étape de séchage à une température inférieure à 180°C, sans étape de calcination ultérieure ; on appellera le produit obtenu "catalyseur".

De préférence, le produit obtenu à l'issue de l'étape e) subit une étape f) de sulfuration.

Ainsi que cela sera décrit ultérieurement, le procédé selon l'invention est réalisé de préférence avec les modes suivants pris seuls ou en combinaison : le support est constitué d'alumine ou de silice alumine ; la totalité de la fonction hydrogénante est introduite lors de l'étape a) ; la totalité du phosphore est introduite lors de l'étape a); le succinate de dialkyle est le succinate de diméthyle ; l'étape c) est réalisée en l'absence de solvant ; l'étape d) est réalisée à une température de 17 à 50°C; l'étape e) est réalisée à une température comprise entre 80 et 160°C.

De façon très préférée, le procédé selon l'invention comprend les étapes successives suivantes :

a) au moins une étape d'imprégnation à sec dudit support par une solution contenant la totalité des éléments de la fonction hydro-déshydrogénante, et la totalité du phosphore,

b) séchage à une température comprise entre 75 et 130°C sans calcination ultérieure,

c) au moins une étape d'imprégnation à sec par une solution d'imprégnation comprenant le succinate de diméthyle et l'acide acétique,

d) une étape de maturation à 17-50°C,

e) une étape de séchage , de préférence sous azote, à une température comprise entre 80 et 160°C, sans étape de calcination ultérieure.

Le précurseur catalytique contenant la fonction hydro-déshydrogénante et un support amorphe à base d'alumine ainsi que son mode de préparation sont décrits ci dessous.

Ledit précurseur catalytique obtenu à l'issue de l'étape a) du procédé selon l'invention peut être préparé pour une grande part par toutes les méthodes bien connues de l'homme du métier.

Ledit précurseur catalytique contient une fonction hydro-déshydrogénante et contient du phosphore et/ou du bore et/ou du fluor en tant que dopant ainsi que le support amorphe. La fonction hydro-deshydrogénante comprend au moins un élément du groupe VIB et d'au moins un élément du groupe VIII. De préférence, la fonction hydro-déshydrogénante est constituée de cobalt et de molybdène.

Le support amorphe dudit précurseur catalytique est à base d'alumine, c'est-à-dire qu'il contient plus de 50 % d'alumine -et de façon générale, il contient uniquement de l'alumine ou de la silice-alumine telle que définie ci-dessous - et éventuellement le(s) métal (métaux) et/ou le(s) dopant(s) qui ont été introduits en-dehors des imprégnations (introduits par ex lors de la préparation -malaxage, peptisation... du support ou de sa mise en forme). Le support est obtenu après mise en forme (extrusion par exemple) et calcination , en général entre 300-600°C.

De préférence, le support est constitué d'alumine, et de préférence d'alumine extrudée. De préférence, l'alumine est l'alumine gamma et de préférence ledit support amorphe est constitué d'alumine gamma.

Dans un autre cas préféré, c'est une silice-alumine contenant au moins 50 % d'alumine. La teneur en silice dans le support est d'au plus 50% poids, le plus souvent inférieure ou égale à 45% poids , de préférence inférieure ou égale à 40%.

Les sources de silicium sont bien connues de l'homme du métier. On peut citer à titre d'exemple l'acide silicique, la silice sous forme de poudre ou sous forme colloïdale (sol de silice), le tétraéthylorthosilicate $Si(OEt)_4$.

La fonction hydro-deshydrogénante dudit précurseur catalytique est assurée par au moins un élément du groupe VIB et par au moins un élément du groupe VIII. Le couple constitué par le cobalt et le molybdène est préféré. La teneur totale en éléments hydro-déshydrogénants est avantageusement supérieure à 6 % poids oxyde par rapport au poids total du catalyseur. Les éléments du groupe VIB préférés sont le molybdène et le tungstène, et généralement le molybdène. Les éléments du groupe VIII préférés sont des éléments non nobles et en particulier le cobalt et le nickel.

Avantageusement, la fonction hydrogénante est choisie dans le groupe formé par les combinaisons des éléments cobalt-molybdène, nickel-molybdène, ou nickel-cobalt-molybdène, ou nickel-molybdène-tungstène.

Dans le cas où une activité importante en hydrodésulfuration, ou en hydrodéazotation et en hydrogénation des aromatiques est souhaitée, la fonction hydro-deshydrogénante est avantageusement assurée par l'association de nickel et de molybdène ; une association de nickel et de tungstène en présence de molybdène peut également être avantageuse. Dans le cas des charges de type distillats sous vide ou plus lourdes, des combinaisons de type cobalt-nickel-molybdène peuvent être avantageusement utilisées.

Les précurseurs de molybdène qui peuvent être utilisés sont également bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels. Les sources de molybdène peuvent également être tout hétéropolycomposé de type Keggin, Keggin lacunaire, Keggin substitué, Dawson, Anderson, Strandberg, par exemple. On utilise de préférence le trioxyde de molybdène et les hétéropolycomposés (hétéropolyanions) de type Strandberg, Keggin, Keggin lacunaire ou Keggin substitué.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le le tungstate d'ammonium, le métatungstate d'ammonium, l'acide phosphotungstique et leurs sels, et éventuellement l'acide silicotungstique ($H_4SiW_{12}O_{40}$) et les sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin susbtitué.

La quantité de précurseur(s) d' (des) élément(s) du groupe VIB est avantageusement comprise entre 5 et 40 % poids d'oxydes du groupe VIB par rapport à la masse totale du précurseur catalytique, de préférence entre 8 et 35 % poids et de manière très préférée entre 10 et 30 % poids.

Les précurseurs d' (des) élément(s) du groupe VIII qui peuvent être utilisés sont avantageusement choisis parmi les oxydes, les hydroxydes, les hydroxycarbonates, les carbonates et les nitrates, par exemple l'hydroxycarbonate de nickel, le carbonate de cobalt ou l'hydroxyde de cobalt sont utilisés de manière préférée

La quantité de précurseur(s) d' (des) élément(s) du groupe VIII est avantageusement comprise entre 1 et 10 % poids d'oxydes du groupe VIII par rapport à la masse totale du précurseur catalytique, de préférence entre 1,5 et 9 % poids et de manière très préférée, entre 2 et 8 % poids.

La fonction hydro-deshydrogénante dudit précurseur catalytique peut être introduite dans le catalyseur à divers niveaux de la préparation et de diverses manières. Ladite fonction hydro-deshydrogénante est toujours introduite, au moins en partie et de préférence en totalité, par imprégnation du support mis en forme. Elle peut aussi être introduite en partie lors de la mise en forme dudit support amorphe.

Dans le cas où la fonction hydro-deshydrogénante est introduite en partie lors de la mise en forme dudit support amorphe, elle peut être introduite en partie (par exemple au plus 10% d'élément(s) du groupe VIB , par exemple introduit par malaxage) seulement au moment du malaxage avec un gel d'alumine choisi comme matrice, le reste de l'(des) élément(s) hydrogénant(s) étant alors introduit ultérieurement. De manière préférée, lorsque la fonction hydro-deshydrogénante est introduite pour partie au moment du malaxage, la proportion d'élément(s) du groupe VIB introduite au cours de cette étape est inférieure à 5 % de la quantité totale d'élément(s) du groupe VIB introduite sur le catalyseur final. De manière préférée, au moins un élément (ou tous) du groupe VIB est introduit en même temps qu'au moins un élément (ou tous) du groupe VIII, quel que soit le mode d'introduction. Ces méthodes et quantités pour l'introduction des éléments sont employées notamment dans le cas où la fonction hydro-déshydrogénante est constituée par CoMo .

Dans le cas où la fonction hydro-déshydrogénante est introduite au moins en partie et de préférence en totalité, après la mise en forme dudit support amorphe, l'introduction de ladite fonction hydro-deshydrogénante sur le support amorphe peut être avantageusement effectuée par une ou plusieurs imprégnations en excès de solution sur le support mis en forme et calciné, ou de préférence par une ou plusieurs imprégnations à sec et, de manière préférée, par une imprégnation à sec dudit support mis en forme et calciné, à l'aide de solutions contenant les sels précurseurs des métaux. De manière très préférée, la fonction hydro-déshydrogénante est introduite en totalité après la mise en forme dudit support amorphe, par une imprégnation à sec dudit support à l'aide d'une solution d'imprégnation contenant les sels précurseurs des métaux. L'introduction de ladite fonction hydro-deshydrogénante peut également être avantageusement effectuée par une ou plusieurs imprégnations du support mis en forme et calciné, par une solution du (ou des) précurseur(s) de la phase active. Dans le cas où les éléments sont introduits en plusieurs imprégnations des sels précurseurs correspondants, une étape de séchage intermédiaire du catalyseur est en général effectuée, à une température comprise entre 50 et 180°C, de manière préférée entre 60 et 150°C et de manière très préférée entre 75 et 130°C.

<u>Du phosphore</u> est également introduit dans le catalyseur. <u>Un autre dopant</u> du catalyseur peut également être introduit qui est choisi parmi le bore, le fluor pris seul ou en mélange. Le dopant est un élément ajouté, qui en lui-même ne présente aucun caractère catalytique mais qui accroît l'activité catalytique du (des) métal (métaux).

Ledit dopant peut être avantageusement introduit seul ou en mélange avec l'un au moins des éléments de la fonction hydro-déshydrogénante.

Il peut également être introduit dès la synthèse du support.

Il peut également être introduit juste avant ou juste après la peptisation de la matrice choisie, telle que par exemple et de préférence l'oxyhydroxyde d'aluminium (boehmite) précurseur de l'alumine.

Ledit dopant peut également être avantageusement introduit en mélange avec le(s) précurseur(s) de la fonction hydro-déshydrogénante, en totalité ou en partie sur le support amorphe mis en forme, de préférence l'alumine ou la silice-alumine sous forme extrudée, par une imprégnation à sec dudit support amorphe à l'aide d'une solution contenant les sels précurseurs des métaux et le(s) précurseur(s) du (des) dopant(s).

La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/ethanolamine.

La source de phosphore préférée est l'acide orthophosphorique $H_3PO_4$, mais ses sels et esters comme phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Le dopant est avantageusement introduit dans le précurseur catalytique dans une quantité d'oxyde dudit dopant par rapport au catalyseur :

- comprise entre 0 et 40 %, de préférence de entre 0 et 30 % et de manière encore plus préférée entre 0 et 20 %, de préférence entre 0 et 15 % et de manière encore plus préférée entre 0 et 10 % lorsque ledit dopant est le bore; lorsque le bore est présent, de préférence la quantité minimum est de 0.1 % poids,

- comprise entre 0,1 à 20 %, de préférence entre 0,1 et 15 % et de manière encore plus préférée entre 0,1 et 10 % poids, lorsque ledit dopant est le phosphore,

- comprise entre 0 et 20 %, de préférence entre 0 et 15 % et de manière encore plus préférée entre 0 et 10 %, lorsque ledit dopant est le fluor ; lorsque le fluor est présent, de préférence la quantité minimum est de 0.1 % poids.

Le phosphore est toujours présent. Il est introduit au moins en partie (et de préférence en totalité) par imprégnation sur le précurseur catalytique lors de l'étape a) et éventuellement sur le précurseur catalytique séché lors de l'étape c). De façon préférée, il en est de même pour les autres dopants. Néanmoins, comme cela a été dit précédemment, les dopants peuvent être introduits en partie lors de la préparation du support (mise en forme comprise) ou en totalité (à l'exception du phosphore).

L'introduction de ladite fonction hydro-deshydrogénante et éventuellement d'un dopant dans ou sur le support calciné mis en forme est ensuite avantageusement suivie d'une <u>étape b de séchage</u> au cours de laquelle le solvant des sels métalliques précurseurs du (ou des) oxydes de métal(aux) (solvant qui est généralement de l'eau) est éliminé, à une température comprise entre 50 et 180°C, de manière préférée entre 60 et 150°C ou encore entre 65 et 145°C et de manière très préférée entre 70 et 140°C ou encore entre 75 et 130°C. L'étape de séchage du "précurseur catalytique séché" ainsi obtenu n'est jamais suivie d'une étape de calcination sous air à une température supérieure à 200°C. Avantageusement, on opère dans ces gammes de températures à une température d'au plus 150°C, et sans calcination ultérieure à une température supérieure à 180°C.

De préférence, dans l'étape a) du procédé selon l'invention, ledit "précurseur catalytique" est obtenu par imprégnation à sec d'une solution comprenant un (ou des) précurseur(s) de la fonction hydro-déshydrogénante, et du phosphore sur un support amorphe à base d'alumine calciné mis en forme, suivie d'un séchage à une température inférieure à 180°C, de préférence comprise entre 50 et 180 °C, de manière préférée entre 60 et 150°C et de manière très préférée entre 75 et 130°C.

Il est ainsi obtenu est un "précurseur catalytique séché" à l'issue de l'étape b).

Il est possible dans l'étape a) du procédé selon l'invention de préparer une solution d'imprégnation contenant au moins un dopant choisi parmi le bore, le fluor, pris seul ou en mélange

De manière encore plus préférée, le "précurseur catalytique" dans l'étape a) du procédé selon l'invention est préparé avec une solution d'imprégnation contenant au moins un précurseur de chaque élément de la fonction hydro-déshydrogénante, en présence d'un précurseur de phosphore, le support amorphe étant constitué d'alumine ou de silice alumine.

Conformément à <u>l' étape c) du procédé</u> selon l'invention, ledit précurseur catalytique séché est imprégné par une solution d'imprégnation comprenant au moins un succinate de dialkyle C1-C4 (et en particulier du succinate de diméthyle) et de l'acide acétique.

Lesdits composés sont avantageusement introduits dans la solution d'imprégnation de l'étape c) du procédé selon l'invention dans une quantité correspondant :

- à un rapport molaire de succinate de dialkyle (par ex diméthyle) par élément(s) du GVIB imprégné du précurseur catalytique compris entre 0,15 à 2 mole/mole, de préférence compris entre 0,3 à 1,8 mole/mole, de manière préférée compris entre 0,5 et 1,5 mole/mole et de manière très préférée, compris entre 0,8 et 1,2 mole/mole, et

- à un rapport molaire d'acide acétique par élément(s) du GVIB imprégné du précurseur catalytique compris entre 0,1 à 5 mole/mole, de préférence compris entre 0,5 à 4 mole/mole, de manière préférée compris entre 1,3 et 3 mole/mole et de manière très préférée, compris entre 1,5 et 2,5 mole/mole. C'est notamment le cas où la fonction hydro-déshydrogénante est constituée par CoMo.

Conformément à l'étape c) du procédé selon l'invention, la combinaison succinate de dialkyle et acide acétique est introduite sur le précurseur catalytique séché par au moins une étape d'imprégnation et de préférence par une seule étape d'imprégnation d'une solution d'imprégnation sur ledit précurseur catalytique séché.

Ladite combinaison peut avantageusement être déposée en une ou plusieurs étapes soit par imprégnation en slurry, soit par imprégnation en excès, soit par imprégnation à sec, soit par tout autre moyen connus de l'homme du métier.

Selon un mode de réalisation préféré de l'étape c) du procédé de préparation selon l'invention, l'étape c) est une seule étape d'imprégnation à sec.

Conformément à l'étape c) du procédé selon l'invention, la solution d'imprégnation de l'étape c) comprend au moins la combinaison du succinate de dialkyle C1-C4 (en particulier du diméthyle) et de l'acide acétique.

La solution d'imprégnation utilisée à l'étape c) du procédé selon invention peut être complétée par tout solvant non protique connu de l'homme du métier comprenant notamment le toluène, le xylène.

La solution d'imprégnation utilisée à l'étape c) du procédé selon l'invention peut être complétée par tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire utilisé dans l'étape c) du procédé selon l'invention peut également être avantageusement choisi dans le groupe formé par le carbonate de propylène, le DMSO (diméthylsulfoxyde) ou le sulfolane, pris seul ou en mélange. De manière préférée, on utilise un solvant protique polaire. Une liste des solvants polaires usuels ainsi que leur constante diélectrique peut être trouvée dans le livre "Solvents and Solvent Effects in Organic Chemistry, C. Reichardt, Wiley-VCH, 3eme édition, 2003, pages 472-474). De manière très préférée, le solvant utilisé est l'éthanol.

De préférence, il n'y a pas de solvant dans la solution d'imprégnation utilisée à l'étape c) du procédé selon l'invention, ce qui facilite la mise en oeuvre à l'échelle industrielle. De préférence, elle contient uniquement du succinate de dialkyle et de l'acide acétique.

Le succinate de dialkyle utilisé est de préférence compris dans le groupe composé du succinate de diméthyle, du succinate de diéthyle, du succinate de dipropyle , du succinate de diisopropyle et du succinate de dibutyle. De manière préférée, le succinate de dialkyle C1-C4 utilisé est le succinate de diméthyle ou le succinate de diéthyle. De manière très préférée, le succinate de dialkyle C1-C4 utilisé est le succinate de diméthyle. Au moins un succinate de dialkyle C1-C4 est utilisé, de préférence un seul, et de préférence le succinate de diméthyle.

Conformément à l'étape d) du procédé de préparation selon l'invention, le précurseur catalytique imprégné issu de l'étape c) est soumis à d'une étape de maturation. Elle est avantageusement réalisée à pression atmosphérique et à une température comprise entre 17°C et 50°C et généralement une durée de maturation comprise entre dix minutes et quarante huit heures et de préférence comprise entre trente minutes et cinq heures, est suffisante. Des durées plus longues ne sont pas exclues. Un moyen simple d'ajuster la durée de maturation est de caractériser la formation des hétéropolyanions de Keggin par spectroscopie Raman dans le précurseur catalytique séché imprégné issu de l'étape c) du procédé selon l'invention. De manière très préférée, pour augmenter la productivité sans modifier la quantité d'hétéropolyanions reformés, la durée de la maturation est comprise entre trente minutes et quatre heures. De manière encore plus préférée, la durée de la maturation est comprise entre trente minutes et trois heures.

Conformément à l'étape e) du procédé de préparation selon l'invention, le précurseur catalytique issu de l'étape d) est soumis à une étape de séchage à une température inférieure à 180°C, sans étape de calcination ultérieure à une température supérieure à 200°C.

Le but de cette étape est d'obtenir un catalyseur transportable, stockable, et manipulable, en particulier pour le chargement de l'unité d'hydrotraitement. Il s'agit avantageusement, selon le mode de réalisation de l'invention choisi, d'enlever tout ou partie de l'éventuel solvant ayant permis l'introduction de la combinaison du succinate de dialkyle C1-C4 (en particulier de diméthyle) et de l'acide acétique. Dans tous les cas, et en particulier dans le cas où la combinaison succinate de dialkyle C1-C4 (en particulier de diméthyle) et acide acétique est utilisée seule, il s'agit de donner un aspect sec au catalyseur, afin d'éviter que les extrudés ne se collent les uns aux autres durant les étapes de transport, de stockage, de manipulation ou de chargement.

L'étape e) de séchage du procédé selon l'invention est avantageusement effectuée par toute technique connue de l'homme du métier. Elle est avantageusement effectuée à pression atmosphérique ou à pression réduite. De manière préférée cette étape est réalisée à pression atmosphérique.

Cette étape e) est avantageusement effectuée à une température comprise entre 50°C et inférieure à 180°C, de préférence comprise entre 60 et 170 °C et de manière très préférée, comprise entre 80 et 160 °C. Avantageusement, on opère dans ces gammes de températures à une température d'au plus 160°C (la gamme préférée étant 80-180°C), et sans calcination ultérieure à une température supérieure à 180°C.

Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote.

De préférence, cette étape a une durée comprise entre 30 minutes et 4 heures et de préférence entre 1 heure et 3 heures.

A l'issue de l'étape e) du procédé selon l'invention, on obtient un catalyseur séché, qui n'est soumis à aucune étape de calcination ultérieure sous air par exemple à une température supérieure à 200°C.

Le catalyseur obtenu à l'issue de l'étape d) ou de l'étape e) présente un spectre Raman comprenant les bandes les plus intenses à 990, 974 cm$^{-1}$ (hétéropolyanions de type Keggin), les bandes correspondant au succinate (pour le succinate de diméthyle la bande la plus intense est à 853 cm$^{-1}$), et les bandes caractéristiques de l'acide acétique, dont la plus intense à 896 cm$^{-1}$.

Avant son utilisation, il est avantageux de transformer un catalyseur séché ou calciné en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape e) du procédé selon l'invention, ledit catalyseur séché obtenu est donc avantageusement soumis à une étape f) de sulfuration, sans étape de calcination intermédiaire.

Ledit catalyseur séché est avantageusement sulfuré de manière *ex situ* ou *in situ.* Les agents sulfurants sont le gaz H$_2$S ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertion]nonylpolysulfure tels que par exemple le TPS-37 ou le TPS-54 commercialisés par la société ARKEMA, ou tout autre composé connus de l'homme du métier permettant d'obtenir une bonne sulfuration du catalyseur. De manière préféré le catalyseur est sulfuré *in situ* en présence d'un agent sulfurant et d'une charge hydrocarbonée. De manière très préférée le catalyseur est sulfurée *in situ* en présence d'une charge hydrocarbonée additivée de dissulfure de diméthyle.

Enfin, un autre objet de l'invention est l'utilisation du catalyseur selon l'invention dans des procédés d'hydrotraitement, notamment dans les procédés d'hydrodésulfuration, d'hydrodéazotation, d'hydrodémétallation, d'hydrogénation des aromatiques et d'hydroconversion de coupes pétrolières.

Les catalyseurs séchés obtenus par le procédé selon l'invention et ayant de préférence préalablement subi une étape f) de sulfuration sont avantageusement utilisés pour les réactions d'hydrotraitement de charges hydrocarbonées telles que les coupes pétrolières, les coupes issues du charbon ou les hydrocarbures produits à partir du gaz naturel et plus particulièrement pour les réactions d'hydrogénation, d'hydrodéazotation, d'hydrodésaromatisation, d'hydrodésulfuration, d'hydrodémétallation ou d'hydroconversion de charges hydrocarbonées.

Dans ces utilisations, les catalyseurs obtenus par le procédé selon l'invention et ayant de préférence préalablement subi une étape f) de sulfuration présentent une activité améliorée par rapport aux catalyseurs de l'art antérieur. Ces catalyseurs peuvent aussi avantageusement être utilisés lors du pré-traitement des charges de craquage catalytique ou l'hydrodésulfuration des résidus ou l'hydrodésulfuration poussée des gazoles (ULSD Ultra Low Sulfur Diesel).

Les charges employées dans les procédés d'hydrotraitement sont par exemple des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques, prises seules ou en mélanges. Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux.

Les conditions opératoires utilisées dans les procédés mettant en oeuvre les réactions d'hydrotraitement de charges hydrocarbonées décrites ci-dessus sont généralement les suivantes : le température est avantageusement comprise entre 180 et 450 °C, et de préférence entre 250 et 440 °C, la pression est avantageusement comprise entre 0,5 et 30 MPa, et de préférence entre 1 et 18 MPa, la vitesse volumique horaire est avantageusement comprise entre 0,1 et 20 h$^{-1}$ et de préférence entre 0,2 et 5 h$^{-1}$, et le rapport hydrogène/charge exprimé en volume d'hydrogène, mesuré dans les conditions normales de température et pression, par volume de charge liquide est avantageusement compris entre 50 l/l à 2000 l/l.

Les exemples qui suivent démontrent le gain d'activité important sur les catalyseurs préparés selon le procédé selon l'invention par rapport aux catalyseurs de l'art antérieur et précisent l'invention sans toutefois en limiter la portée.

Exemple 1 : Préparation des catalyseurs (NiMoP/alumine) calciné C1A, (NiMoP/alumine) séché additivé avec de l'acide citrique (CA) et du polyéthylène glycol (PEG) C1E, (C1A et C1E étant non-conformes à l'invention) ainsi que des catalyseurs (NiMoP/alumine) séchés additivés avec de l'acide acétique et du succinate de diméthyle C1B et C1F, (qui sont conformes à l'invention)

Une matrice composée de boehmite tabulaire ultrafine ou gel d'alumine, commercialisée par la société Condéa Chemie GmbH a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120 °C, puis calcinés à 600 °C pendant 2 heures sous air humide contenant 50 g d'eau par kg d'air sec. On obtient ainsi des extrudés de support, ayant une surface spécifique de 300 m$^2$/g. L'analyse par la diffraction des rayons X révèle que le support est uniquement composé d'alumine gamma cubique de faible cristallinité.

Sur le support d'alumine décrit précédemment et qui se présente sous la forme « extrudé » on ajoute du nickel, du molybdène et du phosphore. La solution d'imprégnation est préparée par dissolution à chaud de l'oxyde de molybdène et d'hydroxycarbonate de nickel dans la solution d'acide phosphorique en solution aqueuse dans le but d'obtenir une formulation approximativement de 4/22.5/4 exprimée en % poids d'oxydes de nickel, de molybdène et en % poids d'anhydride phosphorique par rapport à la quantité de matière sèche du catalyseur final. Après imprégnation à sec, les extrudés sont laissés à maturer en atmosphère saturée en eau pendant 12 h, puis ils sont séchés une nuit à 90°C. Le précurseur catalytique séché ainsi obtenu est noté C1. La calcination de C1 à 450°C pendant 2 heures conduit au catalyseur calciné C1A. La composition finale des catalyseurs C1 et C1A exprimée sous forme d'oxydes est alors la suivante : $MoO_3$ = 22,4 $\pm$ 0,2 (% en poids), NiO = 4,1 $\pm$ 0,1 (% en poids) et $P_2O_5$ = 4,0 $\pm$ 0,1 (% en poids).

Le catalyseur C1E est préparé par imprégnation du précurseur catalytique séché C1 par une solution contenant de l'acide citrique (CA) et du polyéthylène glycol (PEG) en solution dans l'éthanol de façon à avoir un volume de solution à imprégner égal au volume poreux du précurseur catalytique séché C1. Les teneurs visées en acide citrique (CA) et en polyéthylène glycol (PEG) sont toutes deux de 10 % poids.

Le catalyseur C1B, conforme à l'invention, est réalisé à partir du précurseur catalytique séché C1 par imprégnation à sec d'une solution contenant le mélange succinate de diméthyle et acide acétique dans l'éthanol de manière à obtenir également 10 % poids d'acide acétique et 10% poids de succinate de diméthyle sur le catalyseur final.

Le catalyseur C1F, conforme à l'invention, est réalisé de la même manière mais en absence d'éthanol. On vise une teneur finale en acide acétique de 13% poids et une teneur finale en succinate de diméthyle de 20% poids.

Les catalyseurs subissent encore une étape de maturation de 3 h à 20°C sous air puis un traitement thermique dans un four de type lit traversé à 110°C pendant 3 h.

Exemple 2 : Evaluation des catalyseurs NiMoP/alumine C1A (non conforme), C1E (non conforme). C1B (conforme) en hydrotraitement de gazole de distillation

La sulfuration du catalyseur (30 cm$^3$ de catalyseur sous forme d'extrudés mélangés avec 10 cm$^3$ de SiC de granulométrie 0,8 mm) est effectuée à 50 bars, à VVH = 2 h$^{-1}$, avec un rapport (de débit volumique) H$_2$/HC entrée = 400 Std 1/1. La charge de sulfuration (gazole additivé de 2 % de DMDS Evolution de la société Arkéma) est introduite dans le réacteur sous H$_2$ lorsque celui-ci atteint 150°C. Après une heure à 150°C, la température est augmentée avec une rampe de 25°C/heure jusqu'à 220°C, puis avec une rampe de 12°C/heure jusqu'à atteindre un palier de 350°C, maintenu 12 heures.

Après sulfuration, la température est abaissée à 330 °C et la charge de test est injectée. Le test catalytique s'effectue à une pression totale de 50 bar, à hydrogène perdu, à VVH = 2 h$^{-1}$, avec un rapport H$_2$/HC en entrée de 400 Std 1/1 (débit H$_2$= 24 Std l.h$^{-1}$, débit charge = 60 cm$^3$.h$^{-1}$), et à 330°C, 340 °C et 350 °C.

Afm de pouvoir évaluer les performances des catalyseurs en HDS, et de s'affranchir de la présence d'H$_2$S dans les recettes, le pot de recette est strippé à l'azote à raison de 10 L.h$^{-1}$.

Le gazole utilisé ici est issu d'un brut Arabe lourd. Il contient 0,89 % poids de soufre, 100 ppm poids d'azote et sa TMP [(T$_5$+2T$_{50}$+4T$_{95}$)/7] est de 324 °C et sa densité de 0,848 g/cm$^3$.

L'activité HDS est mesurée à partir de la conversion HDS selon la formule :

$$A_{HDS} = \sqrt{\frac{100}{100 - \%HDS}} - 1$$

et la conversion HDS (%HDS) est donnée par : $\%HDS = \frac{S_{charge} - S_{effluent}}{S_{charge}} \times 100$

Au cours du test, la densité des effluents obtenus à chaque température est mesurée à 15°C. L'évolution des densité a été représenté sur la Figure 1. Ce graphe permet de déterminer la température à laquelle il est nécessaire d'opérer pour avoir une densité donnée, le raffineur ayant un intérêt fort à utiliser le catalyseur qui lui fournira cette performance à la température la plus basse. On constate sur la Figure 1 que le catalyseur selon l'invention permet à isodensité effluent de diminuer la température d'opération d'environ 15°C par rapport au catalyseur C1A de l'art antérieur.

Les résultats obtenus en hydrodésulfuration au cours de ce test ont été reportés dans le tableau ci-dessous :

| Référence | Catalyseur | | Température | | |
|---|---|---|---|---|---|
| | | | 330 °C | 340 °C | 350 °C |
| Activité HDS relative à iso-volume par rapport à C1A (%) | | | | | |
| C1A | NiMoP/alumine calciné non conforme | - | 100 | 100 | 100 |
| C1E | NiMoP/alumine séché additivé non conforme | PEG+CA dans EtOH | 104 | 105 | 106 |
| C1B | NiMoP/alumine séché additivé conforme | DMSU+AA dans EtOH | 121 | 123 | 126 |

Les résultats obtenus montrent qu'en hydrotraitement de gazole, il est intéressant tant au niveau de l'hydrodésulfuration que de l'hydrodéaromatisation (qui se traduit par l'évolution de la densité des effluents) d'additiver le catalyseur par le succinate de diméthyle en combinaison avec l'acide acétique selon le procédé de l'invention. En effet, comme le montre le tableau précédent, l'activité HDS obtenue est de 126 à haute température (correspondant au domaine de l'ULSD, c'est à dire pour une teneur soufre proche de 10 ppm poids) pour le catalyseur selon l'invention, alors que le catalyseur calciné est à 100 (référence) et le catalyseur de l'art antérieur C1E à 106.

Exemple 3 : Evaluation des catalyseursNiMoP/alumine C1A (non conforme), C1F (conforme) en hydrodéazotation de distillat sous vide (DSV) pour une application de type pré-traitement hydrocraquage

Les principales caractéristiques du distillat sous vide utilisé sont données ci-après :

Densité à 20 °C : 0,9365
Soufre : 2,92 % poids
Azote total : 1400 ppm poids

Distillation Simulée :

PI : 361 °C
10% : 430 °C
50 % : 492 °C
90 % : 567 °C
PF : 598 °C

Le test est mené dans un réacteur pilote isotherme à lit fixe traversé, les fluides circulant de bas en haut. Après sulfuration in situ à 350 °C dans l'unité sous pression au moyen d'un gazole de distillation directe auquel est additionné 2 % en poids de diméthyldisulfure, le test d'hydrotraitement a été conduit dans les conditions opératoires suivantes :

Pression totale : 12 MPa
Volume de catalyseur : 40 cm$^3$
Température : 380 °C
Débit d'hydrogène : 40 l/h
Débit de charge : 40 cm$^3$/h

Les performances catalytiques des catalyseurs testés sont données dans le tableau suivant. Elles sont exprimées en activité relative, en posant que celle du catalyseur C1A est égale à 100 et en considérant qu'elles sont d'ordre 1,5. La relation liant l'activité et la conversion en hydrodésulfuration (%HDS) est la suivante :

$$A_{HDS} = \sqrt{\frac{100}{100 - \%HDS}} - 1 \ \ \text{où} \ \%HDS = \frac{S_{charge} - S_{effluent}}{S_{charge}} \times 100$$

La même relation est applicable pour l'hydrodéazotation (% HDN et $A_{HDN}$).

Par ailleurs, on évalue également la conversion brute en fraction ayant un point d'ébullition inférieur à 380 °C obtenue avec chaque catalyseur. Elle est exprimée à partir des résultats de distillation simulée (méthode ASTM D86) par la relation :

$$Conversion = \frac{\%380^{+}_{charge} - \%380^{-}_{effluent.}}{\%380^{+}_{charge}}$$

Le tableau ci-dessous fournit les résultats de test obtenus pour les trois catalyseurs.

| Catalyseur | $A_{HDS}$ relative à C1A (%) | $A_{HDN}$ relative à C1A (%) | Conversion 380 °C⁻ (%) |
|---|---|---|---|
| C1A NiMoP/alumine calciné (non conforme) | 100 | 100 | 25 |
| C1F NiMoP/alumine DMSU+AA (conforme) | 145 | 151 | 29 |

Les résultats catalytiques obtenus montrent que dans le cas d'une application de type prétraitement hydrocraquage, le catalyseur selon l'invention est plus performant qu'un catalyseur NiMoP calciné dans la mesure où le catalyseur selon l'invention permet un gain en hydrodésulfuration, mais également en hydrodéazotation et ce qui est plus surprenant en conversion.

Exemple 4 : Préparation d'un catalyseur NiMoP sur silice alumine calciné C2A (non conforme) et d'un catalyseur NiMoP sur silice alumine séché et additivé à l'acide acétique et au succinate de diméthyle C2B (conforme)

Deux catalyseurs NiMoP ont été réalisés avec une formulation 3.6/18/1.6 sur une silice alumine de type SIRALOX commercialisée par SASOL avec une teneur en silice de 25%. Un précurseur catalytique séché de type NiMoP/silice alumine a été préparé à partir des précurseurs $MoO_3$ et $Ni(OH)_2$ solubilisés à l'aide de $H_3PO_4$ et d'un montage à reflux pendant 2h à 90°C. La solution limpide a ensuite été concentrée par évaporation de l'eau afin d'atteindre le volume d'imprégnation, puis elle a été imprégnée à température ambiante sur la silice alumine. Les extrudés de support ainsi imprégnés subissent une étape de maturation dans une enceinte fermée saturée en eau, pendant une nuit puis ils sont séchés en étuve à 120°C pendant 24 h. Ce précurseur catalytique a ensuite été divisé en deux lots :

le premier a été calciné à 450°C pendant 2h sous air en lit fixe traversé pour donner le catalyseur C2A (non conforme),

le second a été utilisé conformément au protocole selon l'invention en imprégnant goutte à goutte une solution contenant de l'acide acétique et du succinate de diméthyle avec un ratio molaire succinate de diméthyle/acide acétique de 0,58 jusqu'à apparition de l'humidité naissante qui montre que tout la porosité a été remplie. Le catalyseur a ensuite été laissé à maturer 3h et a subi un traitement thermique à 125°C pendant 2 h pour donner le catalyseur C2B conforme à l'invention

Exemple 5 Evaluation en hydrogénation du toluène en présence d'aniline et en hydrocraquage doux de DSV des catalyseurs NiMoP calciné sur silice alumine C2A (non conforme) et NiMoP sur silice alumine séché et additivé à l'acide acétique et au succinate de diméthyle. C2B (conforme)

Le test d'Hydrogénation du Toluène en présence d'Aniline (test "HTA") a pour but d'évaluer l'activité HYDrogénante (HYD), de catalyseurs sulfurés supportés ou massiques, en présence d'$H_2S$ et sous pression d'hydrogène. L'isomérisation et le craquage qui caractérisent la fonction acide du catalyseur supporté sur silice-alumine sont inhibés par la présence de $NH_3$ (suite à la décomposition de l'aniline). L'aniline et/ou $NH_3$ vont ainsi réagir via une réaction acide base avec les sites acides du support. Tous les tests présentés ont été réalisés sur une unité comportant plusieurs microréacteurs en parallèle. Lors du test "HTA", la même charge est utilisée pour la sulfuration du catalyseur et la phase de test catalytique proprement dite. Avant chargement, le catalyseur est conditionné : il est concassé et trié pour que la granulométrie de l'échantillon soit comprise entre 2 et 4 mm. 4 $cm^3$ de catalyseur concassé mélangés avec 4 $cm^3$ de carborundum (SiC, 500 $\mu$m) sont chargés dans les réacteurs.

La charge utilisée pour ce test est la suivante :

| | |
|---|---|
| Toluène | 20 % poids, |
| Cyclohexane | 73,62 % poids, |
| DMDS (DiMéthylDiSulfure) | 5,88 % poids (3,8 % poids en S), |
| Aniline | 0,5 % poids (750 ppm N) |

Le catalyseur est chargé dans le réacteur sous sa forme séchée, non active. L'activation (sulfuration) est effectuée dans l'unité avec cette même charge. C'est l'$H_2S$ qui, formé suite à la décomposition du DMDS, sulfure la phase oxyde. La quantité d'aniline présente dans la charge a été choisie pour obtenir, après décomposition, environ 750 ppm de $NH_3$.

Les conditions opératoires du test d'hydrogénation du toluène sont les suivantes :

P = 6MPa,

VVH = 2 $h^{-1}$ (flux de charge = 8 $cm^3$/h),

$H_2$/HC = 450 Nl/l, (flux $H_2$ = 3,6 Nl/l),

T = 350°C.

On évalue le pourcentage de toluène converti et, en faisant l'hypothèse d'un ordre 1 de la réaction, on en déduit l'activité par la relation suivante :

$$AH_{ordre,1} = \ln \frac{100}{(100 - \%HYD_{toluène})}$$

avec $\%HYD_{toluène}$ = pourcentage de toluène converti.

Le catalyseur C2A (non conforme) a une activité de 0.52 et le catalyseur C2B (conforme à l'invention) de 0.93, ce qui représente un gain considérable et montre l'intérêt de la combinaison acide acétique et succinate de diméthyle pour augmenter l'activité hydrogénante des catalyseurs de type NiMoP sur silice alumine pour l'hydrocraquage doux. De manière à quantifier le gain en conversion et en hydrodésulfuration, un test d'hydrotraitement sur charge de type Distillat Sous Vide ("DSV") a été réalisé.

La charge utilisée est une charge de type "DSV" dont les caractéristiques principales sont reprises dans le tableau ci-après

| Charge | DSV |
|---|---|
| Densité $_{15/4}$ (g/$cm^3$) | 0,897 |
| S organique (% poids) | 0,2374 |
| N organique (ppm) | 450 |
| TMP* (°C) | 467 |

(suite)

| Charge | DSV |
|---|---|
| % poids de 370°C - | 15,9 |

$$*: \quad \text{Température Moyenne Pondérée} = \frac{1T_{5\%} + 2T_{50\%} + 4T_{95\%}}{7}$$

avec $T_{x\%}$ la température d'ébullition des x% de la coupe liquide.

La fraction d'extrudés de longueur comprise entre 2 et 4 mm est testée. Les 4 cm³ de catalyseur sont chargés dans le réacteur sous leur forme oxyde, non active. L'activation (sulfuration) est effectuée dans l'unité avant démarrage du test avec une charge dite de sulfuration (gazole de distillation directe + 2 % poids de DMDS). C'est l'$H_2S$ qui, formé suite à la décomposition du DMDS, sulfure les catalyseurs.

Les conditions opératoires appliquées lors du test sont les suivantes :

P = 6MPa,

WH = 0,6 h⁻¹,

$H_2$/HCsortie = 480 Nl/l,

T = 380°C

Grâce à ce test, un classement des catalyseurs est obtenu par l'évaluation de la conversion brute de la fraction 370⁺ en 370⁻ : Conversion brute en 370⁻ = % poids 370°C⁻ effluents

Les résultats catalytiques sont rassemblés dans le tableau ci-après. Le catalyseur C2B conforme à l'invention permet un gain en conversion de 5 % et surtout en HDS par rapport au catalyseur C2A (non conforme) puisque la teneur en S dans les effluents liquides passent de 60 ppm à 32 ppm lorsque le catalyseur utilisé est additivé par du succinate de diméthyle en combinaison avec l'acide acétique en utilisant le protocole selon l'invention.

| | Conversion brute (%) | Soufre Total dans l'effluent (ppm) |
|---|---|---|
| C2A<br>NiMoP/silice alumine calciné<br>non conforme | 32 | 60 |
| C2B<br>NiMoP/silice alumine séché additivé DMSU + AA<br>conforme | 37 | 32 |

Ces résultats montrent qu'en plus d'un gain en hydrogénation, le catalyseur selon l'invention peut permettre d'obtenir des gains intéressants en hydrocraquage doux par rapport à un catalyseur conventionnel calciné ayant une formulation similaire.

Exemple 6 : Préparation d'un catalyseur CoMoNiP/alumine calciné C3A (non conforme) et d'un catalyseur CoMoNiP/alumine séché additivé au succinate de diméthyle et l'acide acétique C3B (conforme) ainsi que d'un catalyseur CoMoNiP/alumine séché additivé au succinate de diméthyle C3C (non conforme)

L'alumine utilisée dans l'exemple 1 a également été utilisée ici pour réaliser un "précurseur catalytique séché" de formulation NiCoMoP/alumine. Les précurseurs utilisés sont le trioxyde de molybdène, le carbonate de cobalt, l'hydroxycarbonate de nickel et l'acide phosphorique. La solution d'imprégnation est réalisée en une étape par chauffage à reflux de ces précurseurs. La cible correspond à une teneur exprimée en % poids oxyde par rapport au catalyseur sec (après perte au feu à 550°C) : NiO/CoO/MoO₃/P₂O₅ 1/2,3/15/4,4. A l'issue de l'imprégnation, les extrudés sont laissés à maturation durant une nuit en atmosphère saturée en eau puis placés 2h dans une étuve à 120°C. On obtient alors le précurseur catalytique séché qui est, de même que dans l'exemple 4, divisé en trois lots :

un premier lot est calciné à 450°C pendant 3h pour donner le catalyseur C3A (non conforme)

le second lot est imprégné avec une solution contenant de l'acide acétique et du succinate de diméthyle selon le protocole de l'invention : le ratio succinate de diméthyle/acide acétique en solution est de 0.58 et le précurseur catalytique séché est imprégné par cette solution jusqu'à apparition de l'humidité naissante, ce qui montre que la porosité du précurseur catalytique a été remplie de la solution contenant le succinate de diméthyle et l'acide acétique. Ensuite, une maturation de 2 h est réalisée, suivie d'un traitement thermique à 140°C pendant 1h. Le catalyseur ainsi obtenu est le catalyseur C3B, conforme à l'invention.

Le troisième lot est imprégné avec du succinate de diméthyle jusqu'à apparition de l'humidité naissante, ce qui montre que la porosité du précurseur catalytique a été remplie de la solution de succinate de diméthyle. Ensuite, une maturation de 2 h est réalisée, suivie d'un traitement thermique à 140°C pendant 1h. Le catalyseur ainsi obtenu est le catalyseur C3C, non conforme à l'invention.

Exemple 7 : Evaluation des catalyseurs CoMoNiP/alumine calciné C3A (non conforme) et d'un catalyseur CoMoNiP/alumine séché additivé au succinate de diméthyle et à l'acide acétique C3B (conforme) et catalyseur CoMoNiP/alumine séché additivé au succinate de diméthyle C3C (non conforme) en test molécule modèle d'hydrogénation du toluène

Dans les applications telles que l'hydrotraitement des distillats sous vide et des résidus, la fonction hydro-déshydrogénante joue un rôle critique compte tenu de la teneur importante en composés aromatiques de ces charges. Le test d'hydrogénation du toluène a donc été utilisé pour connaître l'intérêt de catalyseurs destinés à des applications telles que le prétraitement du craquage catalytique ou l'hydrodésulfuration des résidus.

Les catalyseurs précédemment décrits dans l'exemple 6, sont sulfurés in situ en dynamique dans le réacteur tubulaire à lit fixe traversé d'une unité pilote de type Microcat (constructeur : société Vinci), les fluides circulant de haut en bas. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,8 % de diméthyldisulfure (DMDS), 20 % de toluène et 74,2 % de cyclohexane (en poids).

La sulfuration est effectuée de température ambiante jusqu'à 350°C, avec une rampe de température de 2°C/min, une VVH = 4h$^{-1}$ et $H_2$/HC = 450Nl/l. Le test catalytique est effectué à 350°C à VVH = 2h$^{-1}$ et $H_2$/HC équivalent à celui de la sulfuration, avec prélèvement minimum de 4 recettes qui sont analysées par chromatographie en phase gazeuse.

On mesure ainsi les activités catalytiques stabilisées de volumes égaux de catalyseurs dans la réaction d'hydrogénation du toluène.

Les conditions détaillées de mesure d'activité sont les suivantes :

| | |
|---|---|
| Pression totale : | 6,0 MPa |
| Pression de toluène : | 0,37 MPa |
| Pression de cyclohexane : | 1,42 MPa |
| Pression de méthane | 0,22 MPa |
| Pression d'hydrogène : | 3,68 MPa |
| Pression d'$H_2$S : | 0,22 MPa |
| Volume de catalyseur : | 4 cm$^3$ (extrudés de longueur comprise entre 2 et 4 mm) |
| Vitesse spatiale horaire : | 2 h$^{-1}$ |
| Température de sulfuration et de test : | 350 °C |

Des prélèvements de l'effluent liquide sont analysés par chromatographie en phase gazeuse. La détermination des concentrations molaires en toluène non converti (T) et des concentrations ses produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante $A_{HYD}$ des catalyseurs en appliquant la formule :

$$A_{HYD} = \ln\left(\frac{100}{100 - X_{HYD}}\right)$$

Le tableau ci-dessous permet de comparer les activités hydrogénantes relatives des catalyseurs préparés dans l'exemple 6.

| Catalyseur | Type d'acide | Quantité d'acide (% poids par rapport au catalyseur final) | Type d'additif organique | Quantité d'additif organique (% poids par rapport au catalyseur final) | $A_{HYD}$ relative par rapport à C3A (%) |
|---|---|---|---|---|---|
| C3A non conforme | - | 0 | - | 0 | 100 |
| C3B conforme | AA | 13 | DMSU | 20 | 127 |
| C3C non conforme | - | 0 | DMSU | 25 | 110 |

Ces résultats catalytiques montrent l'effet particulier au niveau de l'activité hydrogénante de la combinaison acide acétique (AA) et succinate de diméthyle (DMSU) sur le précurseur catalytique séché CoMoNiP/alumine (conforme à invention) par rapport à un catalyseur CoMoNiP/alumine calciné de l'art antérieur. Ce gain d'activité hydrogénante est particulièrement avantageux pour des applications de type charges lourdes comme le prétraitement du craquage catalytique ou encore l'hydrodésulfuration des résidus.

Les spectres Raman ont été obtenus avec un spectromètre de type Raman dispersif équipé d'un laser argon ionisé (514 nm). Le faisceau laser est focalisé sur l'échantillon à l'aide d'un microscope équipé d'un objectif $\times$ 50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/mn puis collecté par un détecteur CCD. La résolution spectrale obtenue est de l'ordre de 0.5 cm$^{-1}$. La zone spectrale enregistrée est comprise entre 300 et 1800 cm$^{-1}$. La durée d'acquisition a été fixée à 120 s pour chaque spectre Raman enregistré.

Des analyses Raman ont été effectuées sur les catalyseurs C16 à C 19 et ont permis de montrer pour les catalyseurs conformes à l'invention la présence sur le spectre Raman des bandes les plus intenses caractéristiques des HPA de Keggin, du succinate de diméthyle et de l'acide acétique. La position exacte des bandes, leurs formes et leur intensités relatives peuvent varier dans une certaine mesure en fonction des conditions d'enregistrement du spectre, tout en restant caractéristiques de cette molécule. Les spectres Raman des composés organiques sont par ailleurs bien documentés soit dans les bases de données de spectre Raman (voir par exemple, Spectral Database for Organic Compounds, http://riodb01.ibase.aist.go.jp/sdbs/cgi-bin/direct_frame_top.cgi) soit par les fournisseurs du produit (voir par exemple, www.sigmaaldrich.com).

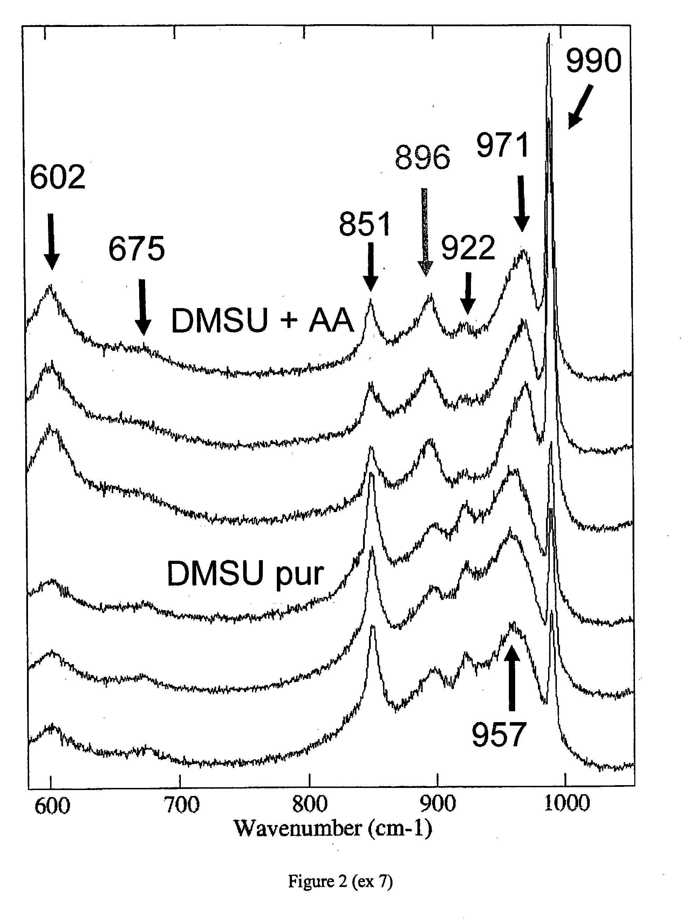

Les spectres Raman ont été enregistrés pour les catalyseurs C3B (DMSU + AA) et C3C. (DMSU pur) et reportés sur la Figure 2. Chaque mesure a été répétée sur 3 zones différentes de l'extrudés. On constate dans le cas du catalyseur C3B la présence de deux bandes à 990 et 971 cm$^{-1}$ caractéristiques des hétéropolyanions de Keggin. Les bandes moins intenses également attribuables à ces espèces sont les bandes à 970, 902, 602 cm$^{-1}$ pour l'hétéropolyanion de Keggin. On constate également sur ces deux spectres la présence de la bande intense du succinate de diméthyle à 851 cm$^{-1}$. Par contre, la bande à 896 cm$^{-1}$ n'est présente que sur le catalyseur selon l'invention.

En résumé, le spectre Raman du catalyseur C3B selon invention présente bien des bandes caractéristiques des hétéropolyanions de Keggin, du succinate de diméthyle et de l'acide acétique tandis que le catalyseur C3C ne possède que les bandes caractéristiques des hétéropolyanions de Keggin et du succinate de diméthyle.

Exemple 8 : Préparation des catalyseurs CoMoP sur alumine C1, C2, C3, C4 (non-conformes à l'invention)

Une matrice composée de boehmite tabulaire ultrafine ou gel d'alumine, commercialisée par la société Condéa Chemie GmbH a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120 °C, puis calcinés à 600 °C pendant 2 heures sous air humide contenant 50 g d'eau par kg d'air sec. On obtient ainsi des extrudés de support, ayant une surface spécifique de 300 $m^2$/g. L'analyse par la diffraction des rayons X révèle que le support est uniquement composé d'alumine gamma cubique de faible cristallinité.

Sur le support d'alumine décrit précédemment et qui se présente sous la forme « extrudé » on ajoute du cobalt, du molybdène et du phosphore. La solution d'imprégnation est préparée par dissolution à chaud de l'oxyde de molybdène (24,34 g) et d'hydroxyde de cobalt (5,34 g) dans la solution d'acide phosphorique (7,47 g) en solution aqueuse. Après imprégnation à sec, les extrudés sont laissés à maturer en atmosphère saturée en eau pendant 12 h, puis ils sont séchés une nuit à 90°C. Le précurseur catalytique séché ainsi obtenu est noté C1. La calcination du précurseur catalytique C1 à 450°C pendant 2 heures conduit au catalyseur calciné C2. La composition finale des catalyseurs C1 et C2 exprimée sous forme d'oxydes est alors la suivante : $MoO_3$ = 22,5 $\pm$ 0,2 (% en poids), CoO = 4,1 $\pm$ 0,1 (% en poids) et $P_2O_5$ = 4,0 $\pm$ 0,1 (% en poids).

Le catalyseur calciné C2 est chargé dans une unité lit traversé et sulfuré par un gazole de distillation directe additivé de 2% poids de disulfure de diméthyle. Un test d'HDS d'un mélange de gazole de distillation directe et d'un gazole en provenance du craquage catalytique est alors conduit pendant 300 h. Après test, le catalyseur usé est déchargé, recueilli et lavé au toluène à reflux puis séparé en deux lots. Le premier lot est régénéré en four de combustion contrôlée en introduisant pour chaque palier de température des quantités croissante d'oxygène, ce qui permet de limiter l'exothermie lié à la combustion du coke. Le palier final de régénération est de 450°C. Le catalyseur ainsi régénéré est analysé par DRX. On note l'absence de raie à 26° caractéristique de la présence de $CoMoO_4$ cristallisé. Ce catalyseur sera par la suite noté C3. Le second lot de catalyseur usé lavé est régénéré en four à moufle à 400°C sans contrôle de l'exothermie de la combustion du coke. L'analyse DRX réalisée après régénération montre la présence d'une raie fine à 26°, caractéristique de la présence de $CoMoO_4$ cristallisé. En outre, ce catalyseur qui sera désormais noté C4 possède une couleur bleu vif très prononcée.

Exemple 9 : Préparation des catalyseurs CoMoP sur alumine additivés C5, C6, C7, C8 C9, C10, C11, C12 (non conformes à l'invention)

Le catalyseur C5 est préparé par imprégnation du précurseur catalytique séché C1 par une solution contenant de l'acide citrique (CA) et du polyéthylène glycol (PEG) en solution dans l'éthanol de façon à avoir un volume de solution à imprégner égale au volume poreux du précurseur catalytique séché C1. Les teneurs visées en acide citrique (CA) et en polyéthylène glycol (PEG) sont toutes deux de 10 % poids.

Le catalyseur C6 est préparé par imprégnation du précurseur catalytique séché C1 par une solution contenant de l'acide citrique (CA) et du polyéthylène glycol (PEG) en solution dans l'éthanol. Les teneurs visées en acide citrique (CA) et en polyéthylène glycol (PEG) sont respectivement de 4 et de 10 % poids.

Le catalyseur C7 est préparé par imprégnation du catalyseur calciné C2 par une solution contenant de l'acide citrique et du polyéthylène glycol en solution dans l'éthanol de façon à avoir un volume de solution à imprégner égale au volume poreux du catalyseur calciné C2. Les teneurs visées en acide citrique (CA) et en polyéthylène glycol (PEG) sont toutes deux de 10 % poids.

Le catalyseur C8 est préparé par imprégnation du catalyseur calciné C2 par une solution contenant de l'acide citrique et du polyéthylène glycol en solution dans l'éthanol. Les teneurs visées en acide citrique (CA) et en polyéthylène glycol (PEG) sont respectivement de 4 et de 10 % poids.

Le catalyseur C9 est préparé par imprégnation du catalyseur calciné C2 par une solution contenant de l'acide acétique (AA) et du succinate de diméthyle (DMSU) en solution dans l'éthanol. Les teneurs visées en acide acétique (AA) et en succinate de diméthyle (DMSU) sont respectivement de 4 et de 10 % poids.

Le catalyseur C10 est préparé par imprégnation du catalyseur régénéré ne comportant pas de phase réfractaire de type $CoMoO_4$, C3, par une solution contenant de l'acide citrique (CA) et du polyéthylène glycol (PEG) dans l'éthanol de façon à avoir un volume de solution à imprégner égale au volume poreux de C3. Les teneurs visées en acide citrique (CA) et en polyéthylène glycol (PEG) sont toutes deux de 10 % poids.

Le catalyseur C11 est préparé par imprégnation du catalyseur régénéré ne comportant pas de phase réfractaire de type $CoMoO_4$, C3, par une solution contenant de l'acide citrique (CA) et du polyéthylène glycol (PEG) dans l'éthanol. Les teneurs visées en acide citrique (CA) et en polyéthylène glycol (PEG) sont respectivement de 4 et de 10 % poids.

Le catalyseur C12 est préparé par imprégnation du catalyseur régénéré ne comportant pas de phase réfractaire de type $CoMoO_4$, C3, par une solution contenant de l'acide acétique et du succinate de diméthyle dans l'éthanol. Les teneurs visées en acide acétique et en succinate de diméthyle sont respectivement de 4 et de 10 % poids.

Le catalyseur C13 est préparé par imprégnation du catalyseur régénéré comportant du $CoMoO_4$, C4, par une solution contenant de l'acide citrique et du polyéthylène glycol dans l'éthanol de façon à avoir un volume de solution à imprégner égale au volume poreux de C4. Les teneurs visées en acide citrique et en polyéthylène glycol sont toutes deux de 10 % poids.

Le catalyseur C14 est préparé par imprégnation du catalyseur régénéré comportant du $CoMoO_4$, C4, par une solution contenant de l'acide citrique et du polyéthylène glycol dans l'éthanol. Les teneurs visées en acide citrique et en polyéthylène glycol sont respectivement de 4 et de 10 % poids.

Le catalyseur C15 est préparé par imprégnation du catalyseur régénéré comportant du $CoMoO_4$, C4, par une solution contenant de l'acide acétique et du succinate de diméthyle dans l'éthanol. Les teneurs visées en acide acétique et en succinate de diméthyle sont respectivement de 4 et de 10 % poids.

Les catalyseurs C5 à C15 sont ensuite soumis à une étape de maturation de 3 h suivie d'une étape de traitement thermique (séchage) de 1 h à 140°C sous azote.

Exemple 10 : Préparation du catalyseur CoMoP additivé C16 (conforme à l'invention)

Le catalyseur C16 est préparé par imprégnation du précurseur catalytique séché C1 par une solution contenant de l'acide acétique, du succinate de diméthyle et de méthanol. Les teneurs visées en acide acétique et en succinate de diméthyle sont respectivement de 4 et de 10 % poids. Le catalyseur est ensuite soumis à une étape de maturation de 3 h sous air à température ambiante, suivie d'une étape de traitement thermique (séchage) à 140°C pendant 1 h sous azote.

Exemple 11 : Test comparatif des catalyseurs C1 à C16 en hydrogénation du toluène dans le cyclohexane sous pression et en présence d'hydrogène sulfuré.

Les catalyseurs précédemment décrits, sont sulfurés in situ en dynamique dans le réacteur tubulaire à lit fixe traversé d'une unité pilote de type Microcat (constructeur : société Vinci), les fluides circulant de haut en bas. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,8 % de diméthyldisulfure (DMDS), 20 % de toluène et 74,2 % de cyclohexane (en poids).

La sulfuration est effectuée dès température ambiante jusqu'à 350°C, avec une rampe de température de 2°C/min, une VVH = 4h$^{-1}$ et $H_2$/HC = 450 Nl/l. Le test catalytique est effectué à 350°C à VVH = 2h$^{-1}$ et $H_2$/HC équivalent à celui de la sulfuration, avec prélèvement minimum de 4 recettes qui sont analysées par chromatographie en phase gazeuse.

On mesure ainsi les activités catalytiques stabilisées de volumes égaux de catalyseurs dans la réaction d'hydrogénation du toluène.

Les conditions détaillées de mesure d'activité sont les suivantes :

- Pression totale : 6,0 MPa

- Pression de toluène : 0,37 MPa

- Pression de cyclohexane : 1,42 MPa

- Pression de méthane 0,22 MPa

- Pression d'hydrogène : 3,68 MPa

- Pression d'$H_2$S : 0,22 MPa

- Volume de catalyseur : 4 cm$^3$ (extrudés de longueur comprise entre 2 et 4 mm)

- Vitesse spatiale horaire : 2 h$^{-1}$

- Température de sulfuration et de test : 350 °C

Des prélèvements de l'effluent liquide sont analysés par chromatographie en phase gazeuse. La détermination des concentrations molaires en toluène non converti (T) et des concentrations ses produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante $A_{HYD}$ des catalyseurs en appliquant la formule :

$$A_{HYD} = \ln\left(\frac{100}{100 - X_{HYD}}\right)$$

Le Tableau 1 compare les activités hydrogénantes relatives des catalyseurs additivés à partir du précurseur catalytique séché C1 (non conforme), égales au rapport de l'activité du catalyseur additivé sur activité du catalyseur calciné de départ C2 (non conforme) pris comme référence (activité 100 %).

*Tableau 1 : Activités relatives par rapport au catalyseur calciné C2 (non conforme) en hydrogénation du toluène des catalyseurs additivés C5, C6 (non conforme) et C16 (conforme) préparés à partir du catalyseur séché C1 (non conforme)*

| Catalyseur | Type d'acide | Quantité d'acide (% poids par rapport au catalyseur final) | Type d'additif organique | Quantité d'additif organique (% poids par rapport au catalyseur final) | $A_{HYD}$ relative par rapport à C2 (%) |
|---|---|---|---|---|---|
| C2 calciné non conforme | - | 0 | - | 0 | 100 |
| C1 séché non conforme | - | 0 | - | 0 | 75 |
| C5 non conforme | CA | 10 | PEG | 10 | - |
| C6 non conforme | CA | 4 | PEG | 10 | 105 |
| C16 conforme | AA | 4 | DMSU | 10 | 138 |

Le Tableau 1 montre que le précurseur catalytique séché C1 (non conforme) a une activité moindre que le catalyseur calciné C2 (non conforme). Le catalyseur additivé C5 (non conforme) préparé par ajout de 10 % poids d'acide citrique (CA) et de 10 % de polyéthylène glycol (PEG) au catalyseur séché C1 n'a pas pu être testé car les extrudés étaient collés en masse à l'issu du séchage, ce qui montre qu'un excès d'acide et d'additif ne convient pas dans le cas où le catalyseur de départ est un catalyseur séché. Le catalyseur C6 (non conforme) préparé par ajout de 4 % d'acide citrique (CA) et de 10 % de polyéthylène glycol (PEG) au catalyseur séché C1 a une activité améliorée par rapport au catalyseur séché de départ de 40 %. Néanmoins, comme le catalyseur séché de départ C1 a une activité en retrait de 25 % par rapport au catalyseur conventionnel calciné C2, l'activité hydrogénante relative du catalyseur C6 par rapport au catalyseur C2 ne présente qu'un gain de 5 % ce qui représente la marge d'erreur de ce test. Il n'y a donc pas d'intérêt à additiver le catalyseur séché par la combinaison PEG + CA. Enfin, le catalyseur C16 (conforme) préparé par ajout de 4 % d'acide acétique (AA) et de 10 % de succinate de diméthyle (DMSU) présente un gain de 84 % par rapport au catalyseur séché C1 (non conforme) de départ. Par rapport au catalyseur calciné C2 (non conforme) utilisé conventionnellement, l'activité de ce catalyseur C16 (conforme) présente un gain de 38 %, ce qui est supérieur à une nouvelle génération de catalyseur (gain de 25 à 30 %). Ces résultats catalytiques montrent l'effet particulier et surprenant de la combinaison acide acétique (AA) et succinate de diméthyle (DMSU) sur catalyseur séché (conforme à l'invention) par rapport à la combinaison acide citrique (CA) et polyéthylène glycol (PEG) (non conforme à l'invention).

De la même manière, le Tableau 2 compare les activités hydrogénantes relatives des catalyseurs additivés à partir du catalyseur séché C1 (non conforme), égales au rapport de l'activité du catalyseur additivé sur l'activité du catalyseur calciné de départ C2 (non conforme) pris comme référence (activité 100 %).

*Tableau 2 : Activités relatives par rapport au catalyseur calciné C2 (non conforme) en hydrogénation du toluène des catalyseurs additivés C7, C8, C9 (non conformes) préparés à partir du catalyseur calciné C2 (non conforme)*

| Catalyseur | Type d'acide | Quantité d'acide (% poids par rapport au catalyseur) | Type d'additif organique | Quantité d'additif organique (% poids par rapport au catalyseur) | $A_{HYD}$ relative par rapport à C2 (%) |
|---|---|---|---|---|---|
| C2 calciné non conforme | - | 0 | - | 0 | 100 |
| C7 non conforme | CA | 10 | PEG | 10 | 102 |
| C8 non conforme | CA | 4 | PEG | 10 | 114 |
| C9 non conforme | AA | 4 | DMSU | 10 | 105 |

Le Tableau 2 montre de manière surprenante que le catalyseur additivé C7 (non conforme) préparé par ajout de 10 % poids d'acide citrique (AC) et de 10 % de polyéthylène glycol (PEG) au catalyseur calciné C2 a une activité proche, voire équivalente, à celle du catalyseur calciné de départ C2 (non conforme), ce qui montre qu'un excès d'acide et d'additif qui ne convenait pas dans le cas où le catalyseur de départ était un catalyseur séché est peu profitable dans le cas d'un catalyseur calciné. Le catalyseur C8 (non conforme) préparé par ajout de 4 % d'acide citrique (CA) et de 10 % de polyéthylène glycol (PEG) au catalyseur calciné C2 a une activité améliorée par rapport au catalyseur calciné de départ de 14 %. Enfin, le catalyseur C9 (non conforme) préparé par ajout de 4 % d'acide acétique (AA) et de 10 % de succinate de diméthyle (DMSU) présente une activité proche (gain de 5 %) de celle du catalyseur calciné C2 (non conforme) de départ. Ces résultats catalytiques montrent bien l'intérêt particulier de la combinaison acide acétique (AA) et succinate de diméthyle (DMSU) uniquement sur précurseur catalytique séché C1 (combinaison conforme à invention) et non sur catalyseur calciné C2 (combinaison non conforme à invention).

De la même manière, le Tableau 3 compare les activités hydrogénantes relatives des catalyseurs additivés (non conformes) préparés à partir du catalyseur régénéré ne contenant pas de phase réfractaire de type $CoMoO_4$, C3.

*Tableau 3 : Activités relatives par rapport au catalyseur calciné C2 (non conforme) en hydrogénation du toluène des catalyseurs additivés C10, C11, C12 (non conformes) préparés à partir du catalyseur régénéré C3 (non conforme) ne possédant pas de phase cristallisée $CoMoO_4$*

| Catalyseur | Type d'acide | Quantité d'acide (% poids par rapport au catalyseur) | Type d'additif organique | Quantité d'additif organique (% poids par rapport au catalyseur) | $A_{HYD}$ relative par rapport à C2 (%) |
|---|---|---|---|---|---|
| C3 régénéré ne contenant pas de phase cristallisée non conforme | - | 0 | - | 0 | 97 |
| C10 non conforme | CA | 10 | PEG | 10 | 104 |
| C11 non conforme | CA | 4 | PEG | 10 | 109 |
| C12 non conforme | AA | 4 | DMSU | 10 | 99 |

Le Tableau 3 montre que le catalyseur additivé C10 (non conforme) préparé par ajout de 10 % poids d'acide citrique (CA) et de 10 % de polyéthylène glycol (PEG) au catalyseur régénéré C3 ne contenant pas de phase réfractaire de type $CoMoO_4$, a une activité proche, voire équivalente, à celle du catalyseur calciné de départ C2 (non conforme), ce qui montre qu'un excès d'acide et d'additif est également peu profitable dans le cas d'un catalyseur régénéré ne possédant pas de phase cristallisée $CoMoO_4$. Le catalyseur C11 (non conforme) préparé par ajout de 4 % d'acide citrique (CA) et de 10 % de polyéthylène glycol (PEG) au catalyseur régénéré C3 ne contenant pas de phase réfractaire de type CoMoO4 a une activité améliorée par rapport au catalyseur C3 (non conforme) de départ de 12 %, ce qui lui confère une activité améliorée de 9 % par rapport au catalyseur neuf calciné C2. Enfin, le catalyseur C12 (non conforme) préparé par ajout de 4 % d'acide acétique (CA) et de 10 % de succinate de diméthyle (DMSU) présente une activité proche de celle du catalyseur calciné C2 (non conforme). Ces résultats catalytiques montrent bien l'intérêt particulier de la combinaison acide acétique (AA) et succinate de diméthyle (DMSU) sur catalyseur séché C1 (conforme à l'invention) par rapport à la même combinaison sur catalyseur régénéré C3 ne présentant pas de phase cristallisée de type $CoMoO_4$ (non conforme à l'invention).

De la même manière, le Tableau 4 compare les activités hydrogénantes relatives des catalyseurs additivés à partir du catalyseur régénéré C4 (non conforme) présentant du $CoMoO_4$. La présence de $CoMoO_4$ est confirmée par analyse DRX.

*Tableau 4 : Activités relatives par rapport au catalyseur calciné C2 (non conforme) en hydrogénation du toluène des catalyseurs additivés C4, C13, C14, C15 (non conformes) préparés à partir du catalyseur régénéré C4 (non conforme) possédant des phases cristallisées de type $CoMoO_4$*

| Catalyseur | Type d'acide | Quantité d'acide (% poids par rapport au catalyseur) | Type d'additif organique | Quantité d'additif organique (% poids par rapport au catalyseur) | $A_{HYD}$ relative par rapport à C2 (%) |
|---|---|---|---|---|---|
| C4 régénéré contenant du CoMoO4 cristallisé non conforme | - | 0 | - | 0 | 73 |
| C13 non conforme | CA | 10 | PEG | 10 | 103 |
| C14 non conforme | CA | 4 | PEG | 10 | 85 |
| C15 non conforme | AA | 4 | DMSU | 10 | 75 |

Le Tableau 4 montre que le catalyseur additivé C13 (non conforme) préparé par ajout de 10 % poids d'acide citrique (CA) et de 10 % de polyéthylène glycol (PEG) au catalyseur régénéré contenant du $CoMoO_4$, C4, a une activité proche, voire équivalente, à celle du catalyseur calciné de départ C2 (non conforme), ce qui montre qu'un excès d'acide et d'additif est profitable dans le cas d'un catalyseur régénéré possédant des phases cristallisées $CoMoO_4$. En effet, le catalyseur C14 (non conforme) préparé par ajout de 4 % d'acide citrique (CA) et de 10 % de polyéthylène glycol (PEG) au catalyseur régénéré possédant des phases cristallisées de type $CoMoO_4$ C4 (non conforme) a une activité insuffisamment améliorée par rapport au catalyseur C4 (non conforme) de départ puisque son activité reste inférieure à celle du catalyseur neuf calciné C2. Enfin, le catalyseur C15 (non conforme) préparé par ajout de 4 % d'acide acétique (AA) et de 10 % de succinate de diméthyle (DMSU) présente une activité proche (gain de 3 %) de celle du catalyseur C4 (non conforme) et beaucoup trop basse par rapport au catalyseur neuf calciné C2. Ces résultats catalytiques montrent bien l'intérêt particulier de la combinaison acide acétique (AA) et succinate de diméthyle (DMSU) sur catalyseur séché C1 (ce qui est conforme à invention) par rapport à la même combinaison sur catalyseur régénéré présentant des phases cristallisées de type $CoMoO_4$ C4 (ce qui est non conforme à invention). Cette combinaison est en particulier inopérante sur catalyseurs contenant des phases réfractaires cristallisées de type $CoMoO_4$, contrairement à la combinaison acide citrique (CA) et polyéthylène glycol (PEG).

Exemple 12 : Préparation des catalyseurs C17 et C18 (non conformes à l'invention), C19 (conforme à l'invention) et comparaison en HDS de gazole des catalyseurs C2 (non conforme), C17 et C 18 (non conformes), C16 et C19 (conformes)

Le catalyseur C17 est préparé par imprégnation du précurseur catalytique C1 par du succinate de diméthyle (DMSU) pur. Cela revient à viser 30 % poids de succinate de diméthyle sur le catalyseur final. Le catalyseur subit ensuite une étape de maturation de 3h à 20°C puis un traitement thermique de 140°C pendant 1h sous air dans un four de type lit traversé. Le catalyseur obtenu à l'issu de ce traitement thermique est noté C17. Ce catalyseur est non conforme à invention car il ne contient pas d'acide acétique en combinaison avec le succinate de diméthyle.

Le catalyseur C 18 est préparé de la même manière mais en remplissant la porosité du précurseur catalytique C1 par de l'acide acétique. On obtient 31 % poids par rapport au poids du catalyseur. Les étapes de maturation/traitement thermique sont similaires à C17.

Le catalyseur C19 est préparé par imprégnation du précurseurs catalytique C1 par une solution contenant uniquement le mélange succinate de diméthyle et acide acétique avec un ratio molaire succinate de diméthyle sur molybdène de 1,1. Cela revient à viser des teneurs par rapport au catalyseur final de respectivement 25 et 18 % poids pour le succinate de diméthyle et l'acide acétique. Le catalyseur subit ensuite une étape de maturation de 3h à température ambiante puis un traitement thermique de 140°C pendant 1 h sous air dans un four de type lit traversé. Le catalyseur obtenu à l'issu de ce traitement thermique est noté C19. Ce catalyseur est conforme à l'invention.

Les catalyseurs C2 (non conforme), C16 (conforme), C17 (non conforme) et C19 (conforme) ont été testé en HDS de gazole.

Caractéristiques de la charge gazole utilisée :

- Densité à 15 °C : 0,8522
- Soufre : 1,44 % en poids
- Distillation Simulée :

    ■ PI : 155 °C
    ■ 10% : 247 °C
    ■ 50% : 315 °C
    ■ 90% : 392 °C
    ■ PF : 444 °C

Le test est mené dans un réacteur pilote isotherme à lit fixe traversé, les fluides circulant de bas en haut. Après sulfuration in situ à 350 °C dans l'unité sous pression au moyen du gazole du test auquel est additionné 2 % en poids de diméthyldisulfure, le test d'hydrodésulfuration a été conduit dans les conditions opératoires suivantes :

- Pression totale : 7 MPa
- Volume de catalyseur: 30 cm$^3$
- Température : 340 °C
- Débit d'hydrogène: 24 l/h
- Débit de charge : 60 cm$^3$/h

Les performances catalytiques des catalyseurs testés sont données dans le Tableau 3. Elles sont exprimées en activité relative, en posant que celle du catalyseur calciné C2 est égale à 100 et en considérant qu'elles sont d'ordre 1,5. La relation liant l'activité et la conversion en hydrodésulfuration (notée %HDS) est la suivante :

$$A_{HDS} = \frac{100}{\sqrt{100 - \%HDS}} - 1$$

Les résultats obtenus sont reportés dans le Tableau 5.

*Tableau 5 : Activité relative à iso-volume en hydrodésulfuration de gazole des catalyseurs C16 (conforme), C17 (non conforme), C18 (conforme)par rapport au catalyseur calciné C2 (non conforme)*

| Catalyseur | Résumé des principales différences de procédé de préparation | $A_{HDS}$ relativement à C2 (%) | Bandes Raman les plus intenses (cm$^{-1}$) |
|---|---|---|---|
| C16 (conforme) | DMSU (23 % du volume poreux du précurseur catalytique) + AA (9 % du volume poreux du précurseur catalytique) + EtOH (68 % du volume poreux du précurseur catalytique) | 119 | 990, 972 (hétéropolyanions) 853 (DMSU) 896 (AA) |

(suite)

| Catalyseur | Résumé des principales différences de procédé de préparation | $A_{HDS}$ relativement à C2 (%) | Bandes Raman les plus intenses ($cm^{-1}$) |
|---|---|---|---|
| C17 (non conforme) | DMSU pur (100% du volume poreux du précurseur catalytique) | 109 | 990 (hétéropolyanion de Keggin) 853 (DMSU) |
| C18 (non conforme) | AA pur (100% du volume poreux du précurseur catalytique) | 85 | 952 (hétéropolyanion d'Anderson) 896 (AA) |
| C19 (conforme) | DMSU (58 % du volume poreux du précurseur catalytique) + AA (42 % du volume poreux du précurseur catalytique) | 138 | 990, 971 (hétéropolyanions de Keggin) 851 (DMSU) 895 (AA) |

Le Tableau 5 montre clairement l'effet de synergie et l'intérêt particulier de la combinaison acide acétique et succinate de diméthyle sur un précurseur catalytique séché. En effet, les catalyseurs C 17 et C 18 (non conformes) présentent des activités inférieures à celles obtenues pour les catalyseurs C16 et C19 conformes à l'invention. Il est de plus intéressant de remarquer que dans le cas du catalyseur C19 une quantité plus importante d'additif DMSU est imprégné que dans le cas du catalyseur C16, cependant le gain d'activité augmente contrairement à ce qui a pu être mis en évidence dans le cas du PEG et de l'acide citrique dans l'exemple 1.

Les spectres Raman ont été obtenus avec un spectromètre de type Raman dispersif équipé d'un laser argon ionisé (514 nm). Le faisceau laser est focalisé sur l'échantillon à l'aide d'un microscope équipé d'un objectif ×50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/mn puis collecté par un détecteur CCD. La résolution spectrale obtenue est de l'ordre de 0.5 $cm^{-1}$. La zone spectrale enregistrée est comprise entre 300 et 1800 $cm^{-1}$. La durée d'acquisition a été fixée à 120 s pour chaque spectre Raman enregistré.

Des analyses Raman ont été effectuées sur les catalyseurs C16 à C19 et ont permis de montrer pour les catalyseurs conformes à l'invention la présence sur le spectre Raman des bandes les plus intenses caractéristiques des HPA de Keggin, du succinate de diméthyle et de l'acide acétique. La position exacte des bandes, leurs formes et leur intensités relatives peuvent varier dans une certaine mesure en fonction des conditions d'enregistrement du spectre, tout en restant caractéristiques de cette molécule. Les spectres Raman des composés organiques sont par ailleurs bien documentés soit dans les bases de données de spectre Raman (voir par exemple, Spectral Database for Organic Compounds, http://riodb01.ibase.aist.go.jp/sdbs/cgi-bin/direct_frame_top.cgi) soit par les fournisseurs du produit (voir par exemple, www.sigmaaldrich.com).

Sans être lié à une quelconque théorie, on a constaté que les additifs organiques non complexants permettaient la reformation des hétéropolyanions en solution dans les pores du catalyseur. C'est typiquement ce phénomène qui est mis en évidence avec l'apparition des bandes des hétéropolyanions après imprégnation de la solution comprenant le mélange succinate de dialkyle et acide acétique. Cet effet a été qualifié de "reformation des hétéropolyanions" car ceux-ci sont présents initialement dans la solution d'imprégnation mais ne sont pas présents sur le précurseur catalytique séché fraîchement imprégné, par contre ils se reforment lors de l'étape de maturation après imprégnation de additif. Dans le cas du PEG en présence d'acide citrique, l'effet complexant permet la disparition des phases cristallisées, aisément caractérisée par DRX, mais aucun hétéropolyanion n'est reformé.

**Revendications**

1. Catalyseur comprenant un support amorphe à base d'alumine, du phosphore, au moins un succinate de dialkyle C1-C4, de l'acide acétique et une fonction hydro-déshydrogénante comprenant au moins un élément du groupe VIB et au moins un élément du groupe VIII, catalyseur dont le spectre Raman comprend les bandes à 990 et/ou 974 $cm^{-1}$ caractéristiques d'au moins un hétéropolyanion de Keggin, les bandes caractéristiques dudit succinate et la bande principale à 896 $cm^{-1}$ caractéristique de l'acide acétique.

**2.** Catalyseur selon la revendication 1 dans lequel le succinate de dialkyle est le succinate de diméthyle et dans lequel le catalyseur possède dans son spectre les bandes Raman principales à 990 et/ou 974 cm$^{-1}$ caractéristiques des hétéropolyanions de Keggin, et 853 cm$^{-1}$ caractéristique du succinate de diméthyle et 896 cm$^{-1}$ caractéristique de l'acide acétique.

**3.** Catalyseur selon la revendication 1 dans lequel le succinate de dialkyle est le succinate de diéthyle, le succinate de dibutyle ou le succinate de diisopropyle.

**4.** Catalyseur selon l'une des revendications précédentes comprenant un support constitué d'alumine.

**5.** Catalyseur selon l'une des revendications précédentes comprenant un support constitué de silice-alumine.

**6.** Catalyseur selon l'une des revendications précédentes comprenant également du bore et/ou du fluor.

**7.** Catalyseur selon l'une des revendications 1 à 4 et 6, dans lequel la fonction hydro- déshydrogénante est constituée de cobalt et de molybdène et le support est constitué d'alumine.

**8.** Catalyseur selon l'une des revendications 1 à 6 et 7 dans lequel la fonction hydrogénante est choisie dans le groupe formé par les combinaisons des éléments nickel-molybdène, ou nickel- cobalt-molybdène, ou nickel-molybdène-tungstène.

**9.** Catalyseur selon l'une des revendications précédentes et sulfuré.

**10.** Procédé de préparation d'un catalyseur selon l'une des revendications précédentes, ledit procédé comprenant les étapes successives suivantes :

a) au moins une étape d'imprégnation d'un support amorphe à base d'alumine par au moins une solution contenant les éléments de la fonction hydro-déshydrogénante, et du phosphore
b) séchage à une température inférieure à 180°C sans calcination ultérieure
c) au moins une étape d'imprégnation par une solution d'imprégnation comprenant au moins un succinate de dialkyle C1-C4, l'acide acétique et au moins un composé de phosphore, si celui-ci n'a pas été introduit en totalité à l'étape a)
d) une étape de maturation,
e) une étape de séchage à une température inférieure à 180°C, sans étape de calcination ultérieure.

**11.** Procédé selon la revendication 10 dans lequel la totalité de la fonction hydro-déshydrogénante est introduite lors de l'étape a).

**12.** Procédé selon l'une des revendications 10 à 11 dans lequel l'étape c) est réalisée en l'absence de solvant.

**13.** Procédé selon l'une des revendications 10 à 12 dans lequel l'étape c) est réalisée en présence d'un solvant choisi dans le groupe formé par le méthanol, l'éthanol, l'eau, le phénol, le cyclohexanol, pris seuls ou en mélange.

**14.** Procédé selon l'une des revendications 10 à 13 dans lequel le succinate de dialkyle et l'acide acétique sont introduits dans la solution d'imprégnation de l'étape c) dans une quantité correspondant à un rapport molaire de succinate de dialkyle par élément(s) du groupe VIB imprégné du précurseur catalytique compris entre 0,15 et 2 mole/mole, et à un rapport molaire d'acide acétique par élément(s) du groupe VIB imprégné du précurseur catalytique compris entre 0,1 et 5 mole/mole.

**15.** Procédé selon l'une des revendications 10 à 14 dans lequel l'étape d) est réalisée à une température de 17 à 50°C.

**16.** Procédé selon l'une des revendications 10 à 15 dans lequel l'étape e) est réalisée à une température de 80 à 160°C, sans calcination ultérieure à une température supérieure à 180°C.

**17.** Procédé selon l'une des revendications 10 à 16, ledit procédé comprenant les étapes successives suivantes :

a) au moins une étape d'imprégnation à sec dudit support par une solution contenant la totalité des éléments de la fonction hydro-déshydrogénante, et le phosphore,

b) séchage à une température comprise entre 75 et 130°C sans calcination ultérieure,

c) au moins une étape d'imprégnation à sec par une solution d'imprégnation comprenant le succinate de diméthyle et l'acide acétique,

d) une étape de maturation à 17-50°C,

e) une étape de séchage à une température comprise entre 80 et 160°C, sans étape de calcination ultérieure.

18. Procédé selon l'une des revendications 10 à 17 dans lequel la quantité de phosphore introduite dans l'étape a) ou dans l'étape c) si celui-ci n'a pas été introduit en totalité à l'étape a), la quantité introduite dans l'étape a) exprimée en quantité d'oxyde par rapport au catalyseur est comprise entre 0,1 à 20 %, de préférence entre 0,1 et 15 % et de manière encore plus préférée entre 0,1 et 10 % poids.

19. Procédé selon l'une des revendications 10 à 18 dans lequel l'étape e) est réalisée sous azote.

20. Procédé selon l'une des revendications 10 à 19 dans lequel le produit obtenu à l'issue de l'étape e) subit une étape de sulfuration.

21. Procédé d'hydrotraitement de charges hydrocarbonées en présence d'un catalyseur selon l'une des revendications 1 à 9 ou préparé par le procédé selon l'une des revendications 10 à 20.

22. Procédé selon la revendication 21 dans lequel l'hydrotraitement est une hydrodésulfuration une hydrodéazotation, une hydrodémétallation, une hydrogénation des aromatiques ou une hydroconversion.

23. Procédé selon la revendication 22 dans lequel l'hydrotraitement est une hydrodésulfuration poussée de gazoles.

**Patentansprüche**

1. Katalysator, umfassend einen amorphen Träger auf der Basis von Aluminiumoxid, Phosphor, mindestens ein C1-C4-Dialkylsuccinat, Essigsäure und eine hydrierende/dehydrierende Funktion, umfassend mindestens ein Element der Gruppe VIB und mindestens ein Element der Gruppe VIII, wobei das Raman-Spektrum des Katalysators Banden bei 990 und/oder 974 $cm^{-1}$, die für mindestens ein Keggin-Heteropolyanion charakteristisch sind, die Banden, die für das Succinat charakteristisch sind und die Hauptbande bei 896 $cm^{-1}$, die für Essigsäure charakteristisch ist, umfasst.

2. Katalysator nach Anspruch 1, wobei das Dialkylsuccinat Dimethylsuccinat ist und wobei der Katalysator in seinem Spektrum die Raman-Hauptbanden bei 990 und/oder 974 $cm^{-1}$, die für die Keggin-Heteropolyanione charakteristisch sind, und bei 853 $cm^{-1}$, die für Dimethylsuccinat charakteristisch ist und bei 896 $cm^{-1}$, die für Essigsäure charakteristisch ist, aufweist.

3. Katalysator nach Anspruch 1, wobei das Dialkylsuccinat Diethylsuccinat, Dibutylsuccinat oder Diisopropylsuccinat ist.

4. Katalysator nach einem der vorhergehenden Ansprüche, der einen aus Aluminiumoxid bestehenden Träger umfasst.

5. Katalysator nach einem der vorhergehenden Ansprüche, der einen aus Siliciumdioxid-Aluminiumoxid bestehenden Träger umfasst.

6. Katalysator nach einem der vorhergehenden Ansprüche, der außerdem Bor und/oder Fluor umfasst.

7. Katalysator nach einem der Ansprüche 1 bis 4 und 6, wobei die hydrierende/dehydrierende Funktion aus Cobalt und Molybdän besteht und der Träger aus Aluminiumoxid besteht.

8. Katalysator nach einem der Ansprüche 1 bis 6 und 7, wobei die hydrierende Funktion ausgewählt ist aus der Gruppe gebildet aus den Kombinationen der Elemente Nickel-Molybdän oder Nickel-Cobalt-Molybdän oder Nickel-Molybdän-Wolfram.

9. Katalysator nach einem der vorhergehenden Ansprüche und sulfuriert.

**10.** Verfahren zur Herstellung eines Katalysators nach einem der vorhergehenden Ansprüche, wobei das Verfahren die nachstehenden aufeinander folgenden Schritte umfasst:

a) mindestens einen Schritt zum Imprägnieren eines amorphen Trägers auf Basis von Aluminiumoxid mit mindestens einer Lösung, die die Elemente der hydrierenden/dehydrierenden Funktion und Phosphor enthält,
b) Trocknen bei einer Temperatur unterhalb von 180 °C ohne anschließende Kalzinierung,
c) mindestens einen Schritt zum Imprägnieren mit einer Imprägnierlösung, die mindestens ein C1-C4-Dialkylsuccinat, Essigsäure und mindestens eine Phosphorverbindung umfasst, wenn diese in Schritt a) nicht vollständig eingeführt wurde,
d) einen Schritt zum Reifen,
e) einen Schritt zum Trocknen bei einer Temperatur unterhalb von 180 °C ohne anschließenden Kalzinierungsschritt.

**11.** Verfahren nach Anspruch 10, wobei die gesamte hydrierende/dehydrierende Funktion im Verlauf von Schritt a) eingeführt wird.

**12.** Verfahren nach einem der Ansprüche 10 bis 11, wobei der Schritt c) in Abwesenheit von Lösemittel durchgeführt wird.

**13.** Verfahren nach einem der Ansprüche 10 bis 12, wobei der Schritt c) in Gegenwart eines Lösemittels durchgeführt wird, ausgewählt aus der Gruppe gebildet aus Methanol, Ethanol, Wasser, Phenol, Cyclohexanol, allein oder als Gemisch.

**14.** Verfahren nach einem der Ansprüche 10 bis 13, wobei das Dialkylsuccinat und die Essigsäure in die Imprägnierlösung des Schritts c) in einer Menge eingeführt werden, die einem Molverhältnis von Dialkylsuccinat je Element(en) der Gruppe VIB des imprägnierten Katalysatorvorläufers im Bereich zwischen 0,15 und 2 Mol/Mol, und einem Molverhältnis von Essigsäure zu Element(en) der Gruppe VIB des imprägnierten Katalysatorvorläufers im Bereich zwischen 0,1 und 5 Mol/Mol entspricht.

**15.** Verfahren nach einem der Ansprüche 10 bis 14, wobei Schritt d) bei einer Temperatur von 17 bis 50 °C durchgeführt wird.

**16.** Verfahren nach einem der Ansprüche 10 bis 15, wobei Schritt e) bei einer Temperatur von 80 bis 160 °C ohne anschließende Kalzinierung bei einer Temperatur oberhalb von 180 °C durchgeführt wird.

**17.** Verfahren nach einem der Ansprüche 10 bis 16, wobei das Verfahren die nachstehenden aufeinander folgenden Schritte umfasst:

a) mindestens einen Schritt zum Trockenimprägnieren des Trägers mit einer Lösung, die alle Elemente der hydrierenden/dehydrierenden Funktion und Phosphor enthält,
b) Trocknen bei einer Temperatur im Bereich zwischen 75 und 130 °C ohne anschließende Kalzinierung,
c) mindestens einen Schritt zum Trockenimprägnieren mit einer Imprägnierlösung, die das Dimethylsuccinat und die Essigsäure umfasst,
d) einen Schritt zum Reifen bei 17 bis 50 °C,
e) einen Schritt zum Trocknen bei einer Temperatur zwischen 80 und 160 °C ohne anschließenden Kalzinierungsschritt.

**18.** Verfahren nach einem der Ansprüche 10 bis 17, wobei die in Schritt a) oder in Schritt c) eingeführte Menge an Phosphor, wenn diese in Schritt a) nicht vollständig eingeführt wurde, die in Schritt a) eingeführte Menge, ausgedrückt als Oxidmenge bezogen auf den Katalysator, im Bereich zwischen 0,1 bis 20 %, bevorzugt zwischen 0,1 und 15 Gew.-% und noch stärker bevorzugt zwischen 0,1 und 10 Gew.-% liegt.

**19.** Verfahren nach einem der Ansprüche 10 bis 18, wobei der Schritt e) unter Stickstoff durchgeführt wird.

**20.** Verfahren nach einem der Ansprüche 10 bis 19, wobei das am Ende von Schritt e) erhaltene Produkt einem Schritt zur Sulfurierung unterzogen wird.

**21.** Verfahren zur Hydrobehandlung von Kohlenwasserstoffbeschickungen in Gegenwart eines Katalysators nach einem der Ansprüche 1 bis 9 oder eines Katalysators, der mit dem Verfahren nach einem der Ansprüche 10 bis 20 hergestellt wurde.

**22.** Verfahren nach Anspruch 21, wobei es sich bei der Hydrobehandlung um eine Hydrodesulfurierung, eine Hydrodeazotierung, eine Hydrodemetallierung, eine Aromatenhydrierung oder eine Hydrokonversion handelt.

**23.** Verfahren nach Anspruch 22, wobei es sich bei der Hydrobehandlung um eine weitgehende Hydrodesulfurierung von Gasöl handelt.


## Claims

**1.** A catalyst comprising an alumina-based amorphous support, phosphorus, at least one C1-C4 dialkyl succinate, acetic acid and a hydro-dehydrogenizing function comprising at least one group VIII element and at least one group VIB element, a catalyst whose Raman spectrum comprises the bands at 990 and/or 974 cm$^{-1}$ characteristic of at least one Keggin heteropolyanion, the bands characteristic of said succinate and the main band at 896 cm$^{-1}$ characteristic of acetic acid.

**2.** A catalyst as claimed in claim 1, wherein the dialkyl succinate is dimethyl succinate, and the catalyst has in its spectrum the main Raman bands at 990 and/or 974 cm$^{-1}$ characteristic of Keggin heteropolyanions, 853 cm$^{-1}$ characteristic of dimethyl succinate and 896 cm$^{-1}$ characteristic of acetic acid.

**3.** A catalyst as claimed in claim 1, wherein the dialkyl succinate is diethyl succinate, dibutyl succinate or diisopropyl succinate.

**4.** A catalyst as claimed in any one of the previous claims, comprising a support consisting of alumina.

**5.** A catalyst as claimed in any one of the previous claims, comprising a support consisting of silica-alumina.

**6.** A catalyst as claimed in any one of the previous claims, also comprising boron and/or fluorine.

**7.** A catalyst as claimed in any one of claims 1 to 4 and 6, wherein the hydrodehydrogenizing function consists of cobalt and molybdenum, and the support consists of alumina.

**8.** A catalyst as claimed in any one of claims 1 to 6 and 7, wherein the hydrogenizing function is selected from the group made up of the hollowing element combinations: nickelmolybdenum, nickel-cobalt-molybdenum or nickel-molybdenum-tungsten.

**9.** A catalyst as claimed in any one of the previous claims and sulfurized.

**10.** A method of preparing a catalyst as claimed in any one of the previous claims, said method comprising the hollowing successive stages:

a) at least one stage of impregnation of an alumina-based amorphous support by at least one solution containing the elements of the hydro-dehydrogenizing function and phosphorus,
b) drying at a temperature below 180°C without subsequent calcination,
c) at least one stage of impregnation by an impregnation solution comprising at least one C1-C4 dialkyl succinate, acetic acid and at least one phosphorus compound, if the latter has not been entirely introduced in stage a),
d) a maturation stage,
e) a drying stage at a temperature below 180°C, without subsequent calcination stage.

**11.** A method as claimed in claim 10, therein all of the hydro-dehydrogenizing function is introduced in stage a).

**12.** A method as claimed in any one of claims 10 to 11, wherein stage c) is carried out in the absence of solvent.

**13.** A method as claimed in any one of claims 10 to 12, therein stage c) is carried out in the presence of a solvent selected from the group made up of methanol, ethanol, water, phenol, cyclohexanol, alone or in admixture.

**14.** A method as claimed in any one of claims 10 to 13, therein the dialkyl succinate and the acetic acid are introduced into the impregnation solution of stage c) in an amount corresponding to a molar ratio of dialkyl succinate to group VIB element(s) impregnated with the catalytic precursor ranging between 0.15 and 2 mole/mole, and to a molar ratio of acetic acid to group VIB element(s) impregnated with the catalytic precursor ranging between 0.1 and 5 mole/mole.

15. A method as claimed in any one of claims 10 to 14, wherein stage d) is carried out at a temperature ranging from 17°C to 50°C.

16. A method as claimed in any one of claims 10 to 15, wherein stage e) is carried out at a temperature ranging from 80°C to 160°C, without subsequent calcination at a temperature above 180°C.

17. A method as claimed in any one of claims 10 to 16, said method comprising the following successive stages:

a) at least one stage of dry impregnation of said support by a solution containing all of the elements of the hydro-dehydrogenizing function, and phosphorus,
b) drying at a temperature ranging between 75°C and 130°C without subsequent calcination,
c) at least one stage of dry impregnation by an impregnation solution comprising the dimethyl succinate and the acetic acid,
d) a maturation stage at 17°C-50°C,
e) a drying stage at a temperature ranging between 80°C and 160°C, without subsequent calcination stage.

18. A method as claimed in any one of claims 10 to 17, therein the amount of phosphorus introduced in stage a) or in stage c), if the latter has not been entirely introduced in stage a), expressed in amount of oxide in relation to the catalyst, ranges between 0.1 and 20 wt.%, preferably between 0.1 and 15 wt.% and more preferably between 0.1 and 10 wt.%.

19. A method as claimed in any one of claims 10 to 18, wherein stage e) is carried out under nitrogen.

20. A method as claimed in any one of claims 10 to 19, therein the product obtained at the end of stage e) is subjected to a sulfurization stage.

21. A hydrocarbon feed hydrotreatment method carried out in the presence of a catalyst as claimed in any one of claims 1 to 9 or prepared by means of the method as claimed in any one of claims 10 to 20.

22. A method as claimed in claim 21, therein the hydrotreatment is hydrodesulfurization, hydrodenitrogenation, hydrodemetallation, hydrogenation of aromatics or hydroconversion.

23. A method as claimed in claim 22, therein the hydrotreatment is deep diesel fuel hydrodesulfurization.

Figure 1 (ex 2)

Figure 2 (ex 7)

## RÉFÉRENCES CITÉES DANS LA DESCRIPTION

**Documents brevets cités dans la description**

- WO 9641848 A
- WO 0176741 A
- US 4012340 A
- US 3954673 A
- EP 601722 A
- EP 466568 A
- EP 1046424 A
- WO 2006077326 A
- JP 7136523 A
- WO 2005035691 A

**Littérature non-brevet citée dans la description**

- **B. S CLAUSEN ; H. T. TOPSØE ; F.E. MASSOTH.** l'ouvrage Catalysis Science and Technology. Springer-Verlag, 1990, vol. 11
- **TOPØE et al.** *Catalysis Review Science and Engineering,* 1984, 395-420
- **GRIBOVAL ; BLANCHARD ; PAYEN ; FOURNIER ; DUBOIS.** *Catalysis Today,* 1998, vol. 45, 277
- **M. T. POPE.** Heteropoly and Isopoly oxometalates. Springer Verlag, 8
- **GRIBOVAL ; BLANCHARD ; GENGEMBRE ; PAYEN ; FOURNIER ; DUBOIS ; BERNARD.** *Journal of Catalysis,* 1999, vol. 188, 102
- **C. REICHARDT.** Solvents and Solvent Effects in Organic Chemistry. Wiley-VCH, 2003, 472-474